# EUROPEAN PATENT SPECIFICATION

(11) **EP 3 021 520 B1**
(45) Date of publication and mention of the grant of the patent: **15.11.2017**
(21) Application number: 13893908.7
(22) Date of filing: 18.09.2013
(51) Int. Cl.: H04L 12/24, H04W 24/02, H04W 24/08

(54) **METHOD AND APPARATUS FOR DELIMITING PROBLEM**
VERFAHREN UND VORRICHTUNG ZUR ABGRENZUNG VON PROBLEMEN
PROCÉDÉ ET APPAREIL PERMETTANT DE DÉLIMITER UN PROBLÈME

(43) Date of publication of application: 18.05.2016
(73) Proprietor: Huawei Technologies Co., Ltd., Longgang District Shenzhen, Guangdong 518129 (CN)
(72) Inventor: LI, Bin, Shenzhen Guangdong 518129 (CN); XIE, Yinxiang, Shenzhen Guangdong 518129 (CN); ZHAO, Jie, Shenzhen Guangdong 518129 (CN); YE, Jiantao, Shenzhen Guangdong 518129 (CN); NIU, Weiguo, Shenzhen Guangdong 518129 (CN)
(74) Representative: Thun, Clemens
(86) International application number: PCT/CN2013/083772
(87) International publication number: WO 2015/039304

(56) References cited:
- EP-A1- 2 785 098
- CN-A- 102 075 978
- CN-A- 102 143 507
- CN-A- 103 138 963
- CN-A- 103 138 963
- US-A1- 2010 195 496

## Description

### TECHNICAL FIELD

The present invention relates to the field of communications, and in particular, to a problem demarcation method and apparatus.

### BACKGROUND

With rapid development of mobile bandwidths and intelligent terminals, service types of user applications are increasingly richer. Under the drive of market competition, users gradually change their focuses from network status to service quality. To better estimate service experience of users, operators need to estimate network services, and then improve service experience of the users by means of network optimization.

In the prior art, operators mainly analyze service quality by using a KPI (Key Performance Indicator, key performance indicator), to acquire a running status of a network, so as to further implement network optimization and coordination, and improve service experience of users.

In the foregoing process of implementing network optimization and coordination by using a KPI, a case may occur in which an acquired KPI is in a relatively good level, but a user cannot perceive service quality very well. In this case, there may be a problem with the network, but a location of the network problem cannot be known by using the KPI, which therefore causes low efficiency of resolving a problem.

CN 103 138 963 A discloses a method and an apparatus for network problem location based on subscriber perception. A server firstly receives and parses a call history record CHR log sent by a network management system, then determines, according to a parsing result, whether a call of a subscriber is a key quality indicator KQI exception event, and locates a location and a cause of the KQI exception event.

### SUMMARY

Embodiments of the present invention provide a problem demarcation method and apparatus, which are used to rapidly determine, by using a KQI (Key Quality Indicator, key quality indicator) parameter of a user service, a network location in which an exception occurs, so that an operator rapidly resolves a network exception.

To achieve the foregoing objective, the following technical solutions are used in the embodiments of the present invention:

According to a first aspect, an embodiment of the present invention provides a problem demarcation method, comprising: acquiring a first key quality indicator, KQI, wherein the first KQI refers to one of one or more abnormal KQIs among KQIs; and determining a network location of the first KQI according to a demarcation indicator of the first KQI, wherein the network location comprises: a wireless side, a core network side, a terminal side, and a serving SP side, and the demarcation indicator is an indicator used to determine a network location causing a KQI exception; wherein if the network location comprises the wireless side or the core network side, after the determining a network location of the first KQI according to a demarcation indicator of the first KQI, the method further comprises: acquiring a locating indicator corresponding to the first KQI, wherein the locating indicator is used to determine a reason causing a KQI exception; and determining, according to the locating indicator, a reason causing the first KQI in the network location; wherein the locating indicator comprises at least one of a measurement report, MR, and a call history record, CHR; wherein in a case in which the locating indicator comprises the MR, the determining, according to the locating indicator, a reason causing the first KQI in the network location comprises: acquiring a user identifier of the MR, an MR time, a user identifier corresponding to the first KQI, a start time of the first KQI, and an end time of the first KQI, wherein the MR time refers to a time of receiving the MR; if the user identifier of the MR is the same as the user identifier corresponding to the first KQI, and the sum of the MR time and a first time is greater than the start time of the first KQI and is less than the end time of the first KQI, associating a parameter of the MR with the first KQI, wherein the first time is a preset acquisition period of the MR; and determining, according to the parameter of the MR associated with the first KQI, the reason causing the first KQI in the network location.

According to a second aspect, an embodiment of the present invention provides a problem demarcation apparatus, comprising: an acquiring unit, configured to acquire a first key quality indicator KQI, wherein the first KQI refers to one of one or more abnormal KQIs among KQIs; and a determining unit, configured to determine a network location of the first KQI according to a demarcation indicator of the first KQI acquired by the acquiring unit, wherein the network location comprises: a wireless side, a core network side, a terminal side, and a serving SP side, and the demarcation indicator is an indicator used to determine a network location causing a KQI exception; wherein the acquiring unit is further configured to: in a case in which the network location comprises the wireless side or the core network side, acquire a locating indicator corresponding to the first KQI, wherein the locating indicator is used to determine a reason causing a KQI exception; and the determining unit is further configured to determine, according to the locating indicator acquired by the acquiring unit, a reason causing the first KQI in the network location; wherein the locating indicator comprises at least one of a measurement report MR and a call history record CHR; wherein the determining unit is specifically configured to: in a case in which the locating indicator comprises the MR, acquire a user identifier of the MR, an MR time, a user identifier corresponding to the first KQI, a start time of the first KQI, and an end time of the first KQI, wherein the MR time refers to a time of receiving the MR; if the user identifier of the MR is the same as the user identifier corresponding to the first KQI, and the sum of the MR time and a first time is greater than the start time of the first KQI and is less than the end time of the first KQI, associate a parameter of the MR with the first KQI, wherein the first time is a preset acquisition period of the MR; and determine, according to the parameter of the MR associated with the first KQI, the reason causing the first KQI in the network location.

According to the problem demarcation method and apparatus provided in the embodiments of the present invention, a first KQI is acquired, and a network location of the first KQI is determined according to a demarcation indicator of the first KQI. In this way, the network location of the first KQI may be determined by using the demarcation indicator of the KQI, which helps in resolving the exception of the first KQI, so that a network location of an exception is determined rapidly by using a KQI parameter of a user service, and an operator quickly resolves the network exception.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of a problem demarcation method according to an embodiment of the present invention;
FIG. 2 is a schematic diagram of a problem demarcation method, performed according to a demarcation indicator, according to an embodiment of the present invention;
FIG. 3 is a schematic diagram of another problem demarcation method according to an embodiment of the present invention;
FIG. 4 is a schematic diagram of associating an MR with a first KQI according to an embodiment of the present invention;
FIG. 5 is a schematic diagram of associating a CHR with a first KQI according to an embodiment of the present invention;
FIG. 6 is a schematic diagram of another problem demarcation method according to an embodiment of the present invention;
FIG. 7 is a schematic block diagram of a problem demarcation apparatus according to an embodiment of the present invention;
FIG. 8 is a schematic block diagram of another problem demarcation apparatus according to an embodiment of the present invention;
FIG. 9 is a schematic block diagram of another problem demarcation apparatus according to an embodiment of the present invention; and
FIG. 10 is a schematic structural diagram of a problem demarcation apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

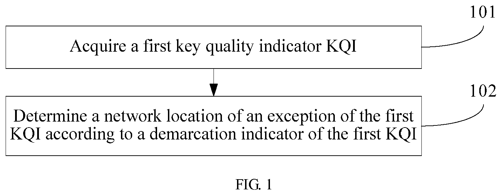

An embodiment of the present invention provides a problem demarcation method. As shown in FIG. 1, the method includes:
101: Acquire a first key quality indicator KQI.

The first KQI refers to one of one or more abnormal KQIs among KQIs.

Specifically, when a user processes a service, a problem demarcation apparatus may acquire KQIs of the service, and therefore, may determine an abnormal KQI from the acquired KQIs, and determine the first KQI from one or more abnormal KQIs.

It should be noted that, a method for determining, by the problem demarcation apparatus, the first KQI from one or more abnormal KQIs may be: randomly selecting one from the one or more abnormal KQIs; or may be: sequencing KQIs based on priorities according to the service, so as to select, from the one or more abnormal KQIs, a KQI having a highest priority as the first KQI.

It should be noted that, the problem demarcation apparatus may be a server, a terminal, or another device such as a board or a meter, which is not limited in the present invention.

Further, after acquiring KQIs of a user service, the problem demarcation apparatus may determine a filter condition according to the user service, and determine one or more abnormal KQIs according to the filter condition, so as to determine the first KQI.

It should be noted that, filter conditions corresponding to different user services may be preset. For different user services, the preset filter conditions are different.

Exemplarily, it is assumed that the user service is a video service on an IUPS interface (an interface between an RNC (Radio Network Controller, radio network controller) and a core network packet domain SGSN (Serving GPRS Support Node, serving GPRS support node) in a UMTS (Universal Mobile Telecommunications System, Universal Mobile Telecommunications System) network), and the preset filter condition includes: an initial video buffer latency is greater than a threshold a, a quantity of pauses in a video is greater than a threshold b or a pause-to-latency ratio of a video is greater than a threshold c, and a playback failure rate of the video is greater than a threshold d. In this example, the problem demarcation apparatus may obtain, through filtering, one or more abnormal KQIs according to the preset filter condition, that is, determine that one or more KQIs satisfying the filter condition are abnormal KQIs, so as to determine the first KQI.

After acquiring the KQI of the video service, the problem demarcation apparatus may detect whether the acquired KQI satisfies the preset filter condition, so as to determine the first KQI, that is, detect whether the initial video buffer latency for the KQI is greater than the threshold a, and if the initial video buffer latency is greater than the threshold a, detect that the KQI satisfies the preset filter condition, and determine the KQI as an abnormal KQI. If the initial video buffer latency is not greater than the threshold a, the problem demarcation apparatus may further detect whether the quantity of pauses in the video in the filter indicator of the KQI is greater than the threshold b or whether the pause-to-latency ratio of the video is greater than the threshold c, and if the quantity of pauses in the video for the KQI is greater than the threshold b or the pause-to-latency ratio of the video is greater than the threshold c, detect that the KQI satisfies the preset filter condition, and determine the KQI as an abnormal KQI. If the quantity of pauses in the video for the KQI is not greater than the threshold b or the pause-to-latency ratio of the video is not greater than the threshold c, the problem demarcation apparatus may further detect whether the playback failure rate of the video for the KQI is greater than the threshold d, and if the playback failure rate of the video is greater than the threshold d, detect that the KQI satisfies the preset filter condition, and determine the KQI as an abnormal KQI.

It should be noted that, a sequence of detecting whether the KQI satisfies the preset filter condition is not limited. Whether the playback failure rate of the video for the KQI is greater than the threshold d may also be first detected, and, other filter indicators for the KQI are then detected. This example is only exemplary.

It should be noted that, the threshold a, the threshold b, the threshold c, and the threshold d are preset. The threshold a may be 3 seconds, the threshold b may be 0, the threshold c may be 1%, and the threshold d may be 5%. Certainly, the threshold a, the threshold b, the threshold c, and the threshold d may also be other values, which are not limited in the present invention.

102: Determine a network location of an exception of the first KQI according to a demarcation indicator of the first KQI.

The network location includes a terminal side, a wireless side, a core network side, and a serving SP (Service Provider, mobile Internet service content provider) side. The demarcation indicator is an indicator used to determine a network location causing a KQI exception.

It should be noted that, the demarcation indicator of the first KQI is preset by the problem demarcation apparatus.

It should be noted that, the problem demarcation apparatus may also preset demarcation indicators to which the network location may correspond.

Specifically, the determining a network location of an exception of the first KQI according to a demarcation indicator of the first KQI includes:
if a quantity of zero windows of a terminal in the demarcation indicator is greater than 0, determining that the network location of the exception of the first KQI is the terminal side; or if a receive window of a terminal in the demarcation indicator is less than a threshold H, determining that the network location of the exception of the first KQI is the terminal side; or if a first latency of TCP (Transmission Control Protocol, Transmission Control Protocol) connection establishment in the demarcation indicator is greater than a threshold I, determining that the network location of the exception of the first KQI is the core network side, where the first latency refers to a latency from a time a request end sends a SYN (Synchronize Sequence Numbers, synchronize sequence number) message to a time the request end receives a SYN ACK (Synchronize Sequence Number Acknowledgment, synchronize sequence number acknowledgement) message in a TCP connection establishment process; or if a second latency of TCP connection establishment in the demarcation indicator is greater than a threshold J, determining that the network location of the exception of the first KQI is the wireless side, where the second latency refers to a latency from a time a receive end sends a SYN ACK message to a time the receive end receives an ACK (Acknowledgment, acknowledgement) message in a TCP connection establishment process; or if a request response latency in the demarcation indicator is greater than a threshold K, determining that the network location of the exception of the first KQI is the core network side; or if an average latency of a downlink RTT (Round-Trip Time, round-trip time) in the demarcation indicator is greater than a threshold L, determining that the network location of the exception of the first KQI is the wireless side; or if a downlink packet loss rate in the demarcation indicator is greater than a threshold M, determining that the network location of the exception of the first KQI is the wireless side; or if an uplink packet loss rate in the demarcation indicator is greater than a threshold N, determining that the network location of the exception of the first KQI is the core network side; or if a failure reason code in the demarcation indicator is a code starting with 4, determining that the network location of the exception of the first KQI is the terminal side; or if a failure reason code in the demarcation indicator is a code starting with 5, determining that the network location of the exception of the first KQI is the serving SP side.

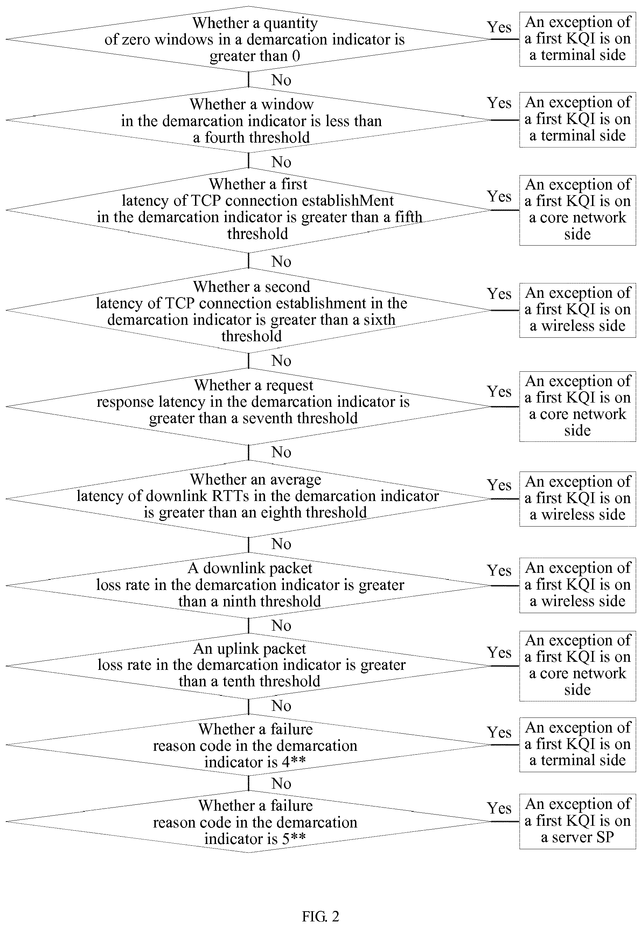

That is, when determining the network location of the exception of the first KQI according to the demarcation indicator of the first KQI, the problem demarcation apparatus may detect whether the quantity of zero windows of the terminal in the demarcation indicator is greater than 0, and if the quantity is greater than 0, determine that the network location of the exception of the first KQI is the terminal side. If the quantity is not greater than 0, the problem demarcation apparatus may continue to detect whether the receive window of the terminal in the demarcation indicator is less than the threshold H, and if the receive window is less than the threshold H, determine that the network location of the exception of the first KQI is the terminal side. If the receive window is not less than the threshold H, the problem demarcation apparatus may continue to detect whether the first latency of TCP connection establishment in the demarcation indicator is greater than the threshold I, and if the first latency is greater than the threshold I, determine that the network location of the exception of the first KQI is the core network side. If the first latency is not greater than the threshold I, the problem demarcation apparatus may continue to detect whether the second latency of TCP connection establishment in the demarcation indicator is greater than the threshold J, and if the second latency is greater than the threshold J, determine that the network location of the exception of the first KQI is the wireless side. If the second latency is not greater than the threshold J, the problem demarcation apparatus may continue to detect whether the request response latency is greater than the threshold K, and if the request response latency is greater than the threshold K, determine that the network location of the exception of the first KQI is the core network side. If the request response latency is not greater than the threshold K, the problem demarcation apparatus may continue to detect whether the average latency of the downlink RTT is greater than the threshold L, and if the average latency is greater than the threshold L, determine that the network location of the exception of the first KQI is the wireless side. If the average latency is not greater than the threshold L, the problem demarcation apparatus may continue to detect whether the downlink packet loss rate is greater than the threshold M, and if the downlink packet loss rate is greater than the threshold M, determine that the network location of the exception of the first KQI is the wireless side. If the downlink packet loss rate is not greater than the threshold M, the problem demarcation apparatus may continue to detect whether the uplink packet loss rate is greater than the threshold N, and if the uplink packet loss rate is greater than the threshold N, determine that the network location of the exception of the first KQI is the core network side. If the uplink packet loss rate is not greater than the threshold N, the problem demarcation apparatus may continue to detect whether the failure reason code in the demarcation indicator is a code starting with 4, and if the failure reason code is a code starting with 4, that is, 4**, determine that the network location of the exception of the first KQI is the terminal side. If the failure reason code is not a code starting with 4, the problem demarcation apparatus may continue to detect whether the failure reason code in the demarcation indicator is a code starting with 5, and if the failure reason code is a code starting with 5, that is, 5**, determine that the network location of the exception of the first KQI is the serving SP side, as shown in FIG. 2.

It should be noted that, in this embodiment of the present invention, when the problem demarcation apparatus determines the network location of the exception of the first KQI according to the demarcation indicator of the first KQI, a sequence of detecting the demarcation indicator of the first KQI is not limited. The foregoing process describes only one case. Whether the failure reason code in the demarcation indicator of the first KQI is a code starting with 5 may first be detected, and in a case in which it is detected that the failure reason code is not a code starting with 5, other demarcation indicators may be then detected. This example is only exemplary.

It should be noted that the demarcation indicator may further include another indicator that can be used to determine the network location. For example, the demarcation indicator may also include an IP fragmentation percentage, a latency jitters, and the like, which is not limited in the present invention.

It should be noted that, the threshold H, the threshold I, the threshold J, the threshold K, the threshold L, the threshold M, and the threshold N are preset. The threshold H may be 3000, the threshold I may be 2000 milliseconds, the threshold J may be 2000 milliseconds, the threshold K may be 3000 milliseconds, the threshold K may be 3000 milliseconds, the threshold L may be 1000 milliseconds, the threshold M may be 1%, and the threshold N may be 2%. Certainly, the threshold H, the threshold I, the threshold J, the threshold K, the threshold L, the threshold M, and the threshold N may also be other values, which are not limited in the present invention.

This embodiment of the present invention provides the problem demarcation method, where a first KQI is acquired, and a network location of an exception of the first KQI is determined according to a demarcation indicator of the first KQI. In this way, the network location of the exception of the first KQI may be determined by using the demarcation indicator of the KQI, so that an operator quickly resolves a network exception by using a KQI parameter of a user service.

It should be noted that, after it is determined that the network location of the exception of the first KQI is the terminal side or the serving SP side, there may be no need to further determine a reason of the exception of the first KQI.

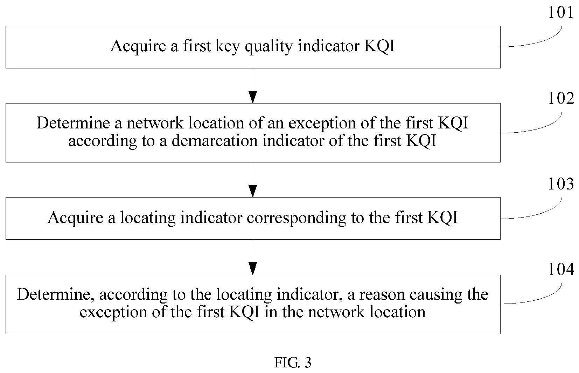

Further, if the network location includes the wireless side or the core network side, after the determining a network location of an exception of the first KQI according to a demarcation indicator of the first KQI, as shown in FIG. 3, the method further includes:
103: Acquire a locating indicator corresponding to the first KQI.

The locating indicator is used to determine a reason causing a KQI exception.

Specifically, after determining the network location of the first KQI, for example, that the network location is the wireless side or the core network side, the problem demarcation apparatus may further determine a reason causing the exception of the first KQI. In this case, the problem demarcation apparatus may acquire the locating indicator of the first KQI.

It should be noted that, the locating indicator used to determine that an exception of the first KQI occurs on the wireless side or the core network side may be preset.

Further, the locating indicator includes at least one of an MR (Measure Record, measurement report) and a CHR (Call History Record, call history record).

It should be noted that, the locating indicator may further include another indicator, for example, wireless traffic measurement, which is not limited in the present invention.

104: Determine, according to the locating indicator, a reason causing the exception of the first KQI in the network location.

Specifically, when the locating indicator includes the MR, the reason causing the exception of the first KQI in the network location may be determined according to the MR.

Further, the determining, according to the MR, the reason causing the exception of the first KQI in the network location specifically includes: acquiring a user identifier of the MR, an MR time, a user identifier corresponding to the first KQI, a start time of the first KQI, and an end time of the first KQI; if the user identifier of the MR is the same as the user identifier corresponding to the first KQI, and the sum of the MR time and a first time is greater than the start time of the first KQI and is less than the end time of the first KQI, associating a parameter of the MR with the first KQI; and determining, according to the parameter of the MR associated with the first KQI, the reason causing the exception of the first KQI in the network location.

That is, after that the locating indicator includes the MR is learned, the user identifier of the MR, the MR time T1, the user identifier corresponding to the first KQI, the start time T2 of the first KQI, and the end time T3 of the first KQI are acquired. The problem demarcation apparatus detects whether the MR satisfies a condition of being associated with the first KQI. That is, the problem demarcation apparatus detects whether the acquired user identifier of the MR is the same as the acquired user identifier corresponding to the first KQI. If they are the same, it indicates that a user corresponding to the MR and a user corresponding to the first KQI are the same user. In a case in which the user identifier of the MR is the same as the user identifier corresponding to the first KQI, the problem demarcation apparatus detects whether the sum of T1 and the first time is greater than T2 and is less than T3. If the sum of T1 and the first time is greater than T2 and is less than T3, the problem demarcation apparatus determines that the MR satisfies the condition of being associated with the first KQI, associates the parameter of the MR with the first KQI, and determines, according to the parameter of the MR associated with the first KQI, the reason causing the exception of the first KQI in the network location.

The MR time refers to a time of receiving the MR, that is, duration from a time of starting to receive the MR to a time of stopping receiving the MR. The start time of the first KQI refers to a start time of a first KQI service. The end time of the first KQI refers to an end time of the first KQI service.

Exemplarily, during network surfing on a mobile phone, if the first KQI is a network surfing KQI, the start time of the first KQI refers to a time of initiating a network service, and the end time of the first KQI refers to a time when webpage display is completed.

Further, the user identifier may be an IMSI (nternational Mobile Subscriber Identification Number, International Mobile Subscriber Identity), or may be another identifier that can uniquely identify a user, which is not limited in the present invention.

Further, the first time is a period of acquiring an MR periodically. Optionally, the first time may be 12 seconds. In this case, it indicates that the problem demarcation apparatus acquires one MR every 12 seconds.

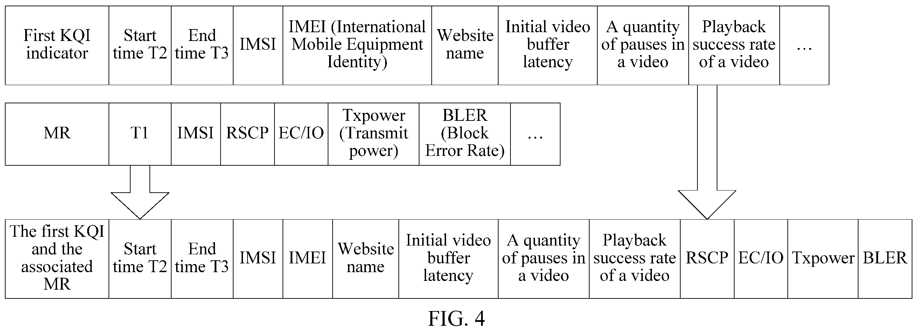

It should be noted that associating the parameter of the MR with the first KQI may be writing the parameter of the MR into an indicator of the first KQI, as shown in FIG. 4. Certainly, a manner of associating the parameter of the MR with the first KQI may also be another method, which is not limited in the present invention.

It should be noted that, the condition of associating the parameter of the MR with the first KQI may also be another condition, for example, replacing the foregoing IMSI with an IP address of the user. Certainly, another association condition may be possible, which is not limited in the present invention.

Further, the parameter of the MR associated with the first KQI includes at least one of the following: an adjacent RSCP (Received Signal Code Power, received signal code power), a serving RSCP, and/or a quantity of pilots, and/or a serving Ec/Io (Energy per Chip, energy per chip/Interfere of Other Cell, interfere of other cell, that is, a ratio of a received signal strength to an adjacent cell interference level).

The adjacent RSCP refers to an RSCP of an adjacent base station of the terminal. The serving RSCP refers to an RSCP of a serving base station of the terminal. The serving Ec/Io refers to an Ec/Io of a serving base station of the terminal.

Further, the determining, according to the parameter of the MR associated with the first KQI, the reason causing the exception of the first KQI in the network location includes at least one of the following: determining, according to the adjacent RSCP and the serving RSCP, whether weak coverage exists, and if weak coverage exists, determining that the reason causing the exception of the first KQI in the network location includes weak coverage; determining, according to the adjacent RSCP, the serving RSCP, and the quantity of pilots, whether pilot pollution exists, and if pilot pollution exists, determining that the reason causing the exception of the first KQI in the network location includes pilot pollution; and determining, according to the adjacent RSCP, the serving RSCP, and the serving Ec/Io, whether interference exists, and if interference exists, determining that the reason causing the exception of the first KQI in the network location includes interference.

That is, after associating the parameter of the MR: the adjacent RSCP, and the serving RSCP, and/or the quantity of pilots, and/or the serving Ec/Io, with the first KQI, the problem demarcation apparatus may determine, according to the foregoing parameters, the reason causing the exception of the first KQI in the network location. The problem demarcation apparatus may determine, according to whether the adjacent RSCP and the serving RSCP in the parameters of the MR that are associated with the first KQI are both less than a threshold A, whether weak coverage exists. If the adjacent RSCP and the serving RSCP are both less than the threshold A, the problem demarcation apparatus determines that weak coverage exists, and determines that the weak coverage causes the exception of the first KQI in the network location. If weak coverage does not exist, the problem demarcation apparatus may determine, according to whether a difference between the serving RSCP and the adjacent RSCP in the parameters of the MR that are associated with the first KQI is less than a threshold B, whether the quantity of pilots is not less than K, and whether the adjacent RSCP is not less than a difference between the serving RSCP and N, whether pilot pollution exists, where N is an integer not less than 0, and preferably, N is 5 DBm (decibel-millivolts); K is an integer less than 3, and preferably, K is 3. If the difference between the serving RSCP and the adjacent RSCP is less than the threshold B, the quantity of pilots is not less than K, and the adjacent RSCP is not less than the difference between the serving RSCP and N, the problem demarcation apparatus determines that pilot pollution exists, and determines that the pilot pollution causes the exception of the first KQI in the network location. If pilot pollution does not exist, the problem demarcation apparatus may determine, according to whether the adjacent RSCP and the serving RSCP in the parameters of the MR that are associated with the first KQI are not less than a threshold C and whether the serving Ec/Io is not greater than a threshold D, whether interference exists. If the adjacent RSCP and the serving RSCP are not less than the threshold C and the serving Ec/Io is not greater than the threshold D, the problem demarcation apparatus determines that interference exists, and determines that the interference causes the exception of the first KQI in the network location.

It should be noted that, a sequence of determining, by the problem demarcation apparatus according to the parameters of the MR that are associated with the first KQI, the reason causing the exception of the first KQI in the network location is not limited in this embodiment of the present invention. The problem demarcation apparatus may also first determine, according to the adjacent RSCP, the serving RSCP, and the quantity of pilots in the parameters of the MR that are associated with first KQI, whether pilot pollution exists, and in a case in which pilot pollution does not exist, determine, according to another parameter of the MR associated with the first KQI, the reason causing the exception of the first KQI in the network location. This example is only exemplary.

It should be noted that, the parameter of the MR associated with the first KQI may also be another parameter, for example, BLER; the problem demarcation apparatus determines, according to another parameter, the reason causing the exception of the first KQI in the network location, which is not limited in the present invention.

It should be noted that, if the parameter of the MR includes multiple adjacent RSCPs, when the reason causing the exception of the first KQI in the network location is determined, whether all adjacent RSCPs satisfy the condition needs to be checked.

It should be noted that, the threshold A, the threshold B, the threshold C, and the threshold D are preset.

Further, in a case in which the locating indicator includes the CHR, the reason causing the exception of the first KQI in the network location may be determined according to the CHR.

Further, the determining, according to the CHR, the reason causing the exception of the first KQI in the network location specifically includes: acquiring a user identifier of the CHR, a start time of the CHR, an end time of the CHR, a user identifier corresponding to the first KQI, a start time of the first KQI, and an end time of the first KQI; if the user identifier of CHR is the same as the user identifier of the first KQI, the start time of the CHR is less than the start time of the first KQI, and the end time of the CHR is greater than the end time of the first KQI, associating a parameter of the CHR with the first KQI; and determining, according to the parameter of the CHR associated with the first KQI, the reason causing the exception of the first KQI in the network location.

That is, after learning that the locating indicator includes the CHR, the problem demarcation apparatus acquires the user identifier of the CHR, the start time T4 of the CHR, the end time T5 of the CHR, the user identifier corresponding to the first KQI, the start time T2 of the first KQI, and the end time T3 of the first KQI. The problem demarcation apparatus detects whether the CHR satisfies a condition of being associated with the first KQI. That is, the problem demarcation apparatus detects whether the user identifier of the CHR is the same as the user identifier corresponding to the first KQI. If the user identifier of the CHR is the same as the user identifier corresponding to the first KQI, it indicates that a user corresponding to the CHR and a user corresponding to the first KQI are the same user. In a case in which the user identifier of the CHR is the same as the user identifier corresponding to the first KQI, the problem demarcation apparatus detects whether T4 is less than T2 and whether T5 is greater than T3. That is, the problem demarcation apparatus detects whether the start time of the CHR is earlier than the start time of the first KQI and whether the end time of the CHR is later than the end time of the first KQI. If T4 is less than T2 and T5 is greater than T3, the problem demarcation apparatus determines that the CHR satisfies the condition of being associated with the first KQI, associates the parameter of the CHR with the first KQI, and determines, according to the parameter of the CHR associated with the first KQI, the reason causing the exception of the first KQI in the network location.

The start time of the CHR refers to a time of establishing an RRC (Radio Resource Control, radio resource control) link, that is, a time of starting to establish a radio link. The end time of the CHR refers to a time of releasing an RRC link, that is, a time of releasing a radio link.

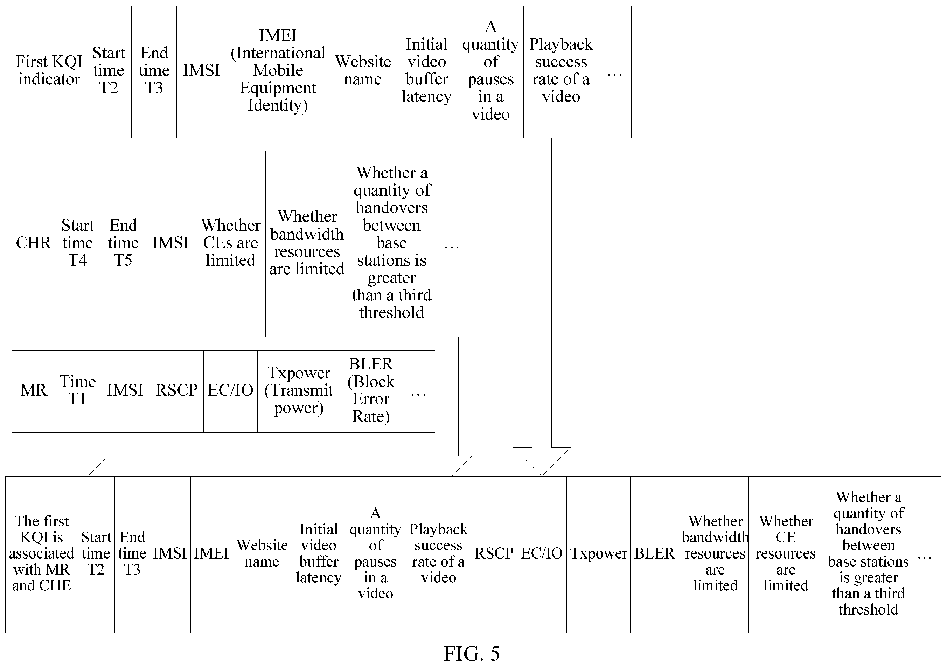

It should be noted that associating the parameter of the CHR with the first KQI may be writing the parameter of the CHR into an indicator of the first KQI, as shown in FIG. 5. Certainly, a manner of associating the parameter of the CHR with the first KQI may also be another method, which is not limited in the present invention.

Further, the parameter of the CHR associated with the first KQI includes at least one of the following: a bandwidth resource, a CE (Channel Element, channel processing element) resource, CQI (Channel Quality Indicator, channel quality indicator) quality, and a quantity of handovers between base stations.

Further, the determining, according to the parameter of the CHR associated with the first KQI, the reason causing the exception of the first KQI in the network location includes at least one of the following: determining, according to the bandwidth resource, whether the bandwidth resource is not greater than a threshold E, and if the bandwidth resource is not greater than the threshold E, determining that the reason causing the exception of the first KQI in the network location includes bandwidth resource limitation; determining, according to the CE resource, whether the CE resource is not greater than a threshold F, and if the CE resource is not greater than the threshold F, determining that the reason causing the exception of the first KQI in the network location includes CE resource limitation; determining, according to the quantity of handovers between base stations, whether the quantity of handovers between base stations is greater than a threshold G, and if the quantity of handovers between base stations is greater than the threshold G, determining that the reason causing the exception of the first KQI in the network location includes frequent handovers between base stations; and determining, according to the CQI quality, whether the CQI quality is not greater than a threshold H, and if the CQI quality is not greater than the threshold H, determining that the reason causing the exception of the first KQI in the network location includes poor CQI quality.

That is, after associating the parameters of the CHR: the bandwidth resource, the CE resource, the CQI quality, and the quantity of handovers between base stations, with the first KQI, the problem demarcation apparatus may determine, according to the foregoing parameters, the reason causing the exception of the first KQI in the network location. The problem demarcation apparatus may detect whether the bandwidth resource is not greater than the threshold E; and if it is detected that the bandwidth resource is not greater than the threshold E, determine that the bandwidth resource is limited, and may determine that the reason causing the exception of the first KQI in the network location is bandwidth resource limitation, If it is detected that the bandwidth resource is greater than the threshold E, the problem demarcation apparatus may detect whether the CE resource is not greater than the threshold F; and if the CE resource is not greater than the threshold F, determine that the CE resource is limited, and may determine that the reason causing the exception of the first KQI in the network location is CE resource limitation. If the CE resource is not greater than the threshold F, the problem demarcation apparatus may detect whether the quantity of handovers between base stations is greater than the threshold G; and if the quantity of handovers between base stations is greater than the threshold G, determine that handovers between base stations are excessively frequent, and may determine that the reason causing the exception of the first KQI in the network location is that the quantity of handovers between base stations is greater than the threshold G. If the quantity of handovers between base stations is not greater than the threshold G, the problem demarcation apparatus may detect whether the CQI quality is not greater than the threshold H; and if the CQI quality is not greater than the threshold H, determine that the CQI quality is poor, and may determine that the reason causing the exception of the first KQI is poor CQI quality.

It should be noted that, a sequence of determining, by the problem demarcation apparatus according to the parameters of the CHR that are associated with the first KQI, the reason causing the exception of the first KQI in the network location is not limited in this embodiment of the present invention. The problem demarcation apparatus may also first detect whether the CE resource is not greater than the threshold F, and when the CE resource is greater than the threshold F, the problem demarcation apparatus then detects another parameter of the CHR, and determines the reason causing the exception of the first KQI in the network location. This example is only exemplary.

It should be noted that, the parameter of the CHR associated with the first KQI may also be another parameter, for example, a packet loss rate or a frame error rate. In this case, the problem demarcation apparatus determines, according to another parameter of the CHR, such as the packet loss rate or the frame error rate, the reason causing the exception of the first KQI in the network location, which is not limited in the present invention.

It should be noted that, the threshold E, the threshold F, and the threshold G are preset.

Through step 103 and step 104, the exception of the first KQI on the wireless side or the core network side may be further located, so as to determine the reason causing the exception of the first KQI on the wireless side or the core network side, which helps in resolving the exception, and further improves efficiency of resolving the network problem.

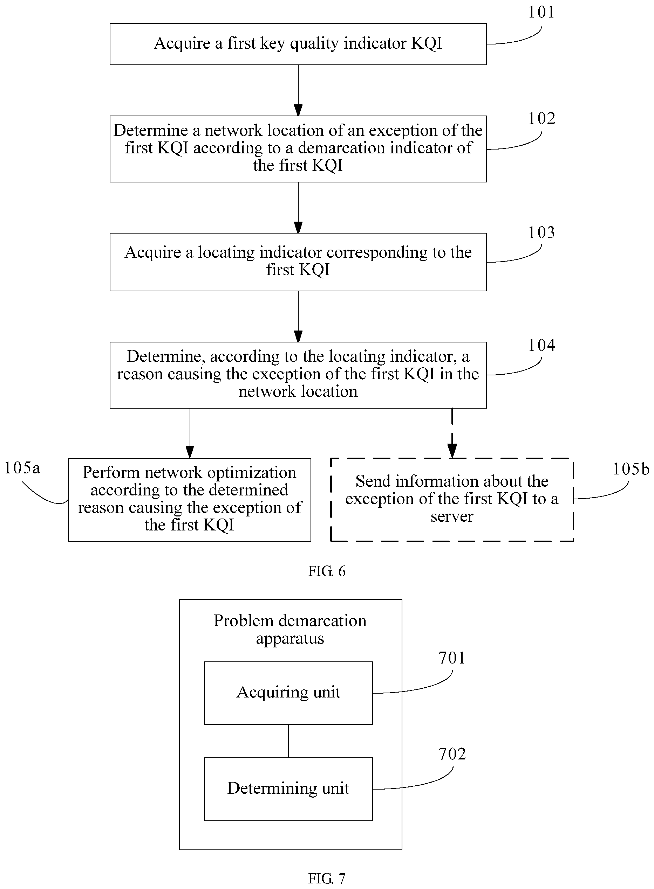

Further, after step 104, for different problem demarcation apparatuses, executed steps are different. If the problem demarcation apparatus is a device on a network side, for example, a server, step 105a is executed; if the problem demarcation apparatus is a device on a terminal side, for example, a mobile phone, step 105b is executed. As shown in FIG. 6, the method further includes:
105a: Perform network optimization according to the determined reason causing the exception of the first KQI.

Specifically, after determining, in step 104, the reason causing the exception of the first KQI on the wireless side or the core network side, the problem demarcation apparatus may perform network optimization according to the determined reason. The performing network optimization according to the determined reason causing the exception of the first KQI includes: if it is determined that the reason causing the exception of the first KQI includes: weak coverage exists, performing radio frequency RF optimization on a base station of weak coverage; if it is determined that the reason causing the exception of the first KQI includes: excessive coverage exists, performing radio frequency RF optimization on a base station of excessive coverage; if it is determined that the reason causing the exception of the first KQI includes: interference exists, performing RF (Radio Frequency, a radio frequency signal) optimization on a base station that is interfered with; if it is determined that the reason causing the exception of the first KQI includes: the bandwidth resource is not greater than the threshold E, performing capacity expansion processing on the bandwidth resource; if it is determined that the reason causing the exception of the first KQI includes: the CE resource is not greater than the threshold F, performing capacity expansion processing on the CE resource; if it is determined that the reason causing the exception of the first KQI includes: the quantity of handovers between base stations is greater than the threshold G, performing parameter checking to determine a parameter that is set inappropriately; and if it is determined that the reason causing the exception of the first KQI includes: the CQI quality is not greater than the threshold H, performing parameter checking to determine a parameter that is set inappropriately.

That is, when the problem demarcation apparatus determines that weak coverage causes the exception of the first KQI, the problem demarcation apparatus performs RF optimization on the base station of weak coverage, that is, adjusts an antenna of the base station of the weak coverage, so as to further adjust coverage of the base station and resolve a problem of weak coverage.

When the problem demarcation apparatus determines that excessive coverage causes the exception of the first KQI, the problem demarcation apparatus performs RF optimization on the base station of excessive coverage, that is, adjusts an antenna of the base station of the excessive coverage, so as to further adjust coverage of the base station and resolve a problem of excessive coverage.

When the problem demarcation apparatus determines that interference causes the exception of the first KQI, the problem demarcation apparatus performs RF optimization on the base station that is interfered with, that is, adjusts an antenna of the base station that is interfered with, so as to further adjust coverage of the base station and resolve a problem of excessive coverage.

When the problem demarcation apparatus determines that the first KQI is abnormal because the bandwidth resource is not greater than the threshold E, that is, bandwidth resource limitation causes the exception of the first KQI, the problem demarcation apparatus performs capacity expansion on the bandwidth resource.

When the problem demarcation apparatus determines that the first KQI is abnormal because the CE resource is not greater than the threshold F, that is, CE resource limitation causes the exception of the first KQI, the problem demarcation apparatus performs capacity expansion on the CE resource.

When the problem demarcation apparatus determines that the first KQI is abnormal because the quantity of handovers between base stations is greater than the threshold G, that is, excessively frequent handovers between base stations cause the exception of the first KQI, the problem demarcation apparatus performs parameter checking to determine a parameter that is set inappropriately, that is, checks a parameter that is already set in the base station, to determine the parameter that is set inappropriately.

When the problem demarcation apparatus determines that the first KQI is abnormal because the CQI quality is not greater than the threshold H, that is, poor CQI quality causes the exception of the first KQI, the problem demarcation apparatus performs parameter checking to determine a parameter that is set inappropriately, that is, checks a parameter that is already set in the base station, to determine the parameter that is set inappropriately.

105b: Send exception information of the first KQI to a server.

Specifically, when the network location includes the wireless side or the core network side, the determined reason causing the exception of the first KQI in the network location is sent to the server. In this case, the exception information is the reason causing the exception of the first KQI.

When the network location includes the terminal side or the SP side, the network location of the exception of the first KQI is sent to the server. In this case, the exception information is the network location of the exception of the first KQI.

That is, when the problem demarcation apparatus is a device on the terminal side, the problem demarcation apparatus may send the acquired exception information of the first KQI to a network side device, so that the network side device performs corresponding processing on the exception of the first KQI.

According to the problem demarcation method provided in this embodiment of the present invention, a first KQI is acquired, and a network location of an exception of the first KQI is determined according to a demarcation indicator of the first KQI. In this way, the network location of the exception of the first KQI may be determined by using the demarcation indicator of the KQI, which helps in resolving the exception of the first KQI, so that a network location of an exception is determined rapidly by using a KQI parameter of a user service, and an operator quickly resolves the network exception. Further, after the network location of the exception of the first KQI is determined, a reason causing the exception of the first KQI in the network location is determined according to a locating indicator, and network optimization is performed according to the reason, thereby further improving efficiency of resolving a network problem.

An embodiment of the present invention provides a problem demarcation apparatus. As shown in FIG. 7, the apparatus includes: an acquiring unit 701 and a determining unit 702.

The acquiring unit 701 is configured to acquire a key quality indicator KQI.

The first KQI refers to one of one or more abnormal KQIs among KQIs.

Specifically, the acquiring unit 701 is specifically configured to: when a user processes a service, acquire KQIs of the service, and therefore, determine an abnormal KQI from the acquired KQI, and further determine the first KQI from one or more abnormal KQIs.

It should be noted that, a method for determining, by the acquiring unit 701, the first KQI from one or more abnormal KQIs may be: randomly selecting one from the one or more abnormal KQIs; or may be: sequencing KQIs based on priorities according to the service, so as to select, from the one or more abnormal KQIs, a KQI having a highest priority as the first KQI.

Further, after acquiring KQIs of a user service, the acquiring unit 701 may determine a filter condition according to the user service, and determine one or more abnormal KQIs, so as to determine the first KQI.

It should be noted that, filter conditions corresponding to different user services may be preset. For different user services, the preset filter conditions are different.

The determining unit 702 is configured to determine a network location of an exception of the first KQI according to a demarcation indicator of the first KQI acquired by the acquiring unit 701.

The network location includes a wireless side, a core network side, a terminal side, and a serving SP side. The demarcation indicator is an indicator used to determine a network location causing a KQI exception.

It should be noted that, the demarcation indicator of the first KQI is preset by the problem demarcation apparatus.

Specifically, the determining unit 702 is specifically configured to: if a quantity of zero windows of a terminal in the demarcation indicator is greater than 0, determine that the network location of the exception of the first KQI is the terminal side; or
if a receive window of a terminal in the demarcation indicator is less than the threshold H, determine that the network location of the exception of the first KQI is the terminal side; or
if a first latency of Transmission Control Protocol TCP connection establishment in the demarcation indicator is greater than a threshold I, determine that the network location of the exception of the first KQI is the core network side, where
the first latency refers to a latency from a time a request end sends a synchronize sequence number SYN message to a time the request end receives a synchronize sequence number acknowledgement SYN ACK message in a TCP connection establishment process; or
if a second latency of TCP connection establishment in the demarcation indicator is greater than a threshold J, determine that the network location of the exception of the first KQI is the wireless side, where
the second latency refers to a latency from a time a receive end sends a SYN ACK message to a time the receive end receives an acknowledgement ACK message in a TCP connection establishment process; or
if a request response latency in the demarcation indicator is greater than a threshold K, determine that the network location of the exception of the first KQI is the core network side; or
if an average latency of a downlink round-trip time RTT in the demarcation indicator is greater than a threshold L, determine that the network location of the exception of the first KQI is the wireless side; or
if a downlink packet loss rate in the demarcation indicator is greater than a threshold M, determine that the network location of the exception of the first KQI is the wireless side; or
if an uplink packet loss rate in the demarcation indicator is greater than a threshold N, determine that the network location of the exception of the first KQI is the core network side; or
if a failure reason code in the demarcation indicator is a code starting with 4, determine that the network location of the exception of the first KQI is the terminal side; or
if a failure reason code in the demarcation indicator is a code starting with 5, determine that the network location of the exception of the first KQI is the serving SP side.

Further, the acquiring unit 701 is further configured to: in a case in which the network location includes the wireless side or the core network side, acquire a locating indicator corresponding to the first KQI.

The locating indicator is used to determine a reason causing a KQI exception.

In this case, the determining unit 702 is further configured to determine, according to the locating indicator acquired by the acquiring unit 701, a reason causing the exception of the first KQI in the network location.

Further, the locating indicator includes at least one of a measurement report MR and a call history record CHR.

The determining unit 702 is specifically configured to: in a case in which the locating indicator includes the MR, determine, according to the MR, the reason causing the exception of the first KQI in the network location.

Specifically, the determining unit 702 is specifically configured to acquire a user identifier of the MR, an MR time, a user identifier corresponding to the first KQI, a start time of the first KQI, and an end time of the first KQI; if the user identifier of the MR is the same as the user identifier corresponding to the first KQI, and the sum of the MR time and a first time is greater than the start time of the first KQI and is less than the end time of the first KQI, associate the parameter of the MR with the first KQI; and determine, according to the parameter of the MR associated with the first KQI, the reason causing the exception of the first KQI in the network location.

The MR time refers to a time of receiving the MR, that is, duration from a time of starting to receive the MR to a time of stopping receiving the MR. The start time of the first KQI refers to a start time of a first KQI service. The end time of the first KQI refers to an end time of the first KQI service.

Exemplarily, during network surfing on a mobile phone, if the first KQI is a network surfing KQI, the start time of the first KQI refers to a time of initiating a network service, and the end time of the first KQI refers to a time when webpage display is completed.

Further, the user identifier may be an IMSI (nternational Mobile Subscriber Identification Number, International Mobile Subscriber Identity), or may be another identifier that can uniquely identify a user, which is not limited in the present invention.

Further, the first time is a period of acquiring an MR periodically. Optionally, the first time may be 12 seconds. In this case, it indicates that the problem demarcation apparatus acquires one MR every 12 seconds.

It should be noted that associating the parameter of the MR with the first KQI may be writing the parameter of the MR into an indicator of the first KQI. Certainly, a manner of associating the parameter of the MR with the first KQI may also be another method, which is not limited in the present invention.

It should be noted that, the condition of associating the parameter of the MR with the first KQI may also be another condition, for example, replacing the foregoing IMSI with an IP address of the user. Certainly, another association condition may be possible, which is not limited in the present invention.

Further, the parameter of the MR includes at least one of the following: an adjacent received signal code power RSCP, and a serving RSCP, and/or a quantity of pilots, and/or a serving ratio Ec/Io of a received signal strength to an adjacent cell interference level.

The determining unit 702 is specifically configured to: determine, according to the adjacent RSCP and the serving RSCP, whether weak coverage exists, and if weak coverage exists, determine that the reason causing the exception of the first KQI in the network location includes weak coverage; and/or determine, according to the adjacent RSCP, the serving RSCP, and the quantity of pilots, whether pilot pollution exists, and if pilot pollution exists, determine that the reason causing the exception of the first KQI in the network location includes pilot pollution; and/or determine, according to the adjacent RSCP, the serving RSCP, and the serving Ec/Io, whether interference exists, and if interference exists, determine that the reason causing the exception of the first KQI in the network location includes interference.

That is, the determining unit 702 is specifically configured to: after associating the parameters of the MR: the adjacent RSCP, and the serving RSCP, and/or the quantity of pilots, and/or the serving Ec/Io, with the first KQI, determine, according to the foregoing parameters, the reason causing the exception of the first KQI in the network location. The determining unit 702 may determine, according to whether the adjacent RSCP and the serving RSCP in the parameters of the MR that are associated with the first KQI are both less than a threshold A, whether weak coverage exists. If the adjacent RSCP and the serving RSCP are both less than the threshold A, the determining unit 702 determines that weak coverage exists, and determines that the weak coverage causes the exception of the first KQI in the network location. If weak coverage does not exist, the determining unit 702 may determine, according to whether a difference between the serving RSCP and the adjacent RSCP in the parameters of the MR that are associated with the first KQI is less than a threshold B, whether the quantity of pilots is not less than K, and whether the adjacent RSCP is not less than a difference between the serving RSCP and N, whether pilot pollution exists, where N is an integer not less than 0, and preferably, N is 5 DBm (decibel-millivolts); K is an integer less than 3, and preferably, K is 3. If the difference between the serving RSCP and the adjacent RSCP is less than the threshold B, the quantity of pilots is not less than K, and the adjacent RSCP is not less than the difference between the serving RSCP and N, the determining unit 702 determines that pilot pollution exists, and determines that the pilot pollution causes the exception of the first KQI in the network location. If pilot pollution does not exist, the determining unit 702 may determine, according to whether the adjacent RSCP and the serving RSCP in the parameters of the MR that are associated with the first KQI are not less than a threshold C and whether the serving Ec/Io is not greater than a threshold D, whether interference exists. If the adjacent RSCP and the serving RSCP are not less than the threshold C and the serving Ec/Io is not greater than the threshold D, the determining unit 702 determines that interference exists, and determines that the interference causes the exception of the first KQI in the network location.

It should be noted that, a sequence of determining, by the determining unit 702 according to the parameters of the MR that are associated with the first KQI, the reason causing the exception of the first KQI in the network location is not limited in this embodiment of the present invention. The problem demarcation apparatus may also first determine, according to the adjacent RSCP, the serving RSCP, and the quantity of pilots in the parameters of the MR that are associated with first KQI, whether pilot pollution exists, and in a case in which pilot pollution does not exist, determine, according to another parameter of the MR associated with the first KQI, the reason causing the exception of the first KQI in the network location. This example is only exemplary.

It should be noted that, the parameter of the MR associated with the first KQI may also be another parameter, for example, BLER; the determining unit 702 determines, according to another parameter, the reason causing the exception of the first KQI in the network location, which is not limited in the present invention.

It should be noted that, if the parameter of the MR includes multiple adjacent RSCPs, when the reason causing the exception of the first KQI in the network location is determined, whether all adjacent RSCPs satisfy the condition needs to be checked.

It should be noted that, the threshold A, the threshold B, the threshold C, and the threshold D are preset.

Further, the determining unit 702 is specifically configured to: in a case in which the locating indicator includes the CHR, determine, according to the CHR, the reason causing the exception of the first KQI in the network location.

Specifically, the determining unit 702 is specifically configured to: acquire a user identifier of the CHR, a start time of the CHR, an end time of the CHR, a user identifier corresponding to the first KQI, a start time of the first KQI, and an end time of the first KQI; if the user identifier of the HCR is the same as the user identifier corresponding to the first KQI, the start time of the CHR is less than the start time of the first KQI, and the end time of the CHR is greater than the end time of the first KQI, associate a parameter of the CHR with the first KQI; and determine, according to the parameter of the CHR associated with the first KQI, the reason causing the exception of the first KQI in the network location.

The start time of the CHR refers to a time of establishing an RRC (Radio Resource Control, radio resource control) link, that is, a time of starting to establish a radio link. The end time of the CHR refers to a time of releasing an RRC link, that is, a time of releasing a radio link.

It should be noted that associating the parameter of the CHR with the first KQI may be writing the parameter of the CHR into an indicator of the first KQI, as shown in FIG. 5. Certainly, a manner of associating the parameter of the CHR with the first KQI may also be another method, which is not limited in the present invention.

Further, the parameter of the CHR associated with the first KQI includes at least one of the following: a bandwidth resource, a CE resource, CQI quality, and a quantity of handovers between base stations.

The determining unit 702 is specifically configured to determine, according to the bandwidth resource, whether the bandwidth resource is not greater than a threshold E, and if the bandwidth resource is not greater than the threshold E, determine that the reason causing the exception of the first KQI in the network location includes bandwidth resource limitation; and/or determine, according to the CE resource, whether the CE resource is not greater than a threshold F, and if the CE resource is not greater than the threshold F, determine that the reason causing the exception of the first KQI in the network location includes CE resource limitation; and/or determine, according to the quantity of handovers between base stations, whether the quantity of handovers between base stations is greater than a threshold G, and if the quantity of handovers between base stations is greater than the threshold G, determine that the reason causing the exception of the first KQI in the network location includes frequent handovers between base stations; and/or determine, according to the CQI quality, whether the CQI quality is not greater than a threshold H, and if the CQI quality is not greater than the threshold H, determine that the reason causing the exception of the first KQI in the network location includes poor CQI quality.

That is, the determining unit 702 is specifically configured to: after associating the parameters of the CHR: the bandwidth resource, the CE resource, the CQI quality, and the quantity of handovers between base stations, with the first KQI, determine, according to the foregoing parameters, the reason causing the exception of the first KQI in the network location. The determining unit 702 may detect whether the bandwidth resource is not greater than the threshold E; and if it is detected that the bandwidth resource is not greater than the threshold E, determine that the bandwidth resource is limited, and may determine that the reason causing the exception of the first KQI in the network location is bandwidth resource limitation. If it is detected that the bandwidth resource is greater than the threshold E, the determining unit 702 may detect whether the CE resource is not greater than the threshold F; and if the CE resource is not greater than the threshold F, determine that the CE resource is limited, and may determine that the reason causing the exception of the first KQI in the network location is CE resource limitation. If the CE resource is not greater than the threshold F, the determining unit 702 may detect whether the quantity of handovers between base stations is greater than the threshold G; and if the quantity of handovers between base stations is greater than the threshold G, determine that handovers between base stations are excessively frequent, and may determine that the reason causing the exception of the first KQI in the network location is that the quantity of handovers between base stations is greater than the threshold G. If the quantity of handovers between base stations is not greater than the threshold G, the determining unit 702 may detect whether the CQI quality is not greater than the threshold H; and if the CQI quality is not greater than the threshold H, determine that the CQI quality is poor, and may determine that the reason causing the exception of the first KQI is poor CQI quality.

It should be noted that, a sequence of determining, by the determining unit 702 according to the parameters of the CHR that are managed by the first KQI, the reason causing the exception of the first KQI in the network location is not limited in this embodiment of the present invention. The problem demarcation apparatus may also first detect whether the CE resource is not greater than the threshold F, and when the CE resource is greater than the threshold F, the problem demarcation apparatus detects another parameter of the CHR, and determines the reason causing the exception of the first KQI in the network location. This example is only exemplary.

It should be noted that, the parameter of the CHR associated with the first KQI may also be another parameter, for example, a packet loss rate or a frame error rate. In this case, the problem demarcation apparatus determines, according to another parameter of the CHR, such as the packet loss rate or the frame error rate, the reason causing the exception of the first KQI in the network location, which is not limited in the present invention.

It should be noted that, the threshold E, the threshold F, and the threshold G are preset.

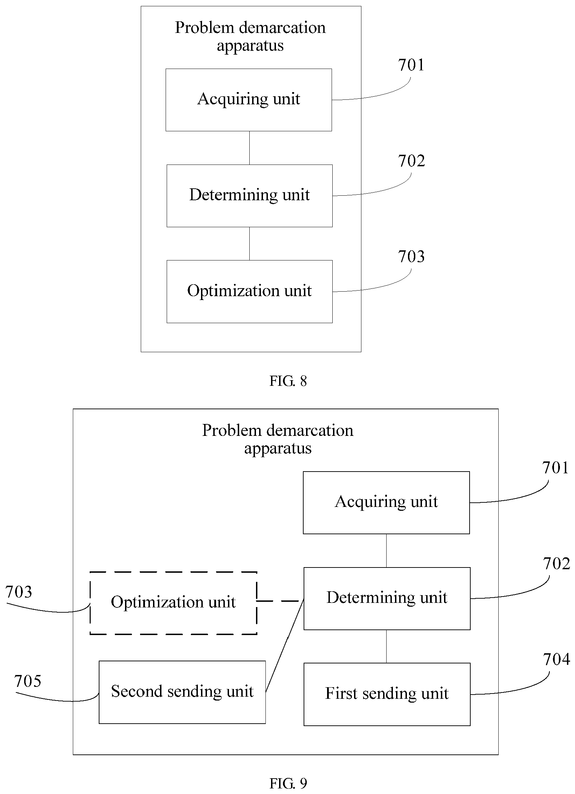

As shown in FIG. 8, the problem demarcation apparatus further includes:
an optimization unit 703, configured to perform network optimization according to the reason, determined by determining unit 702, causing the exception of the first KQI.

Specifically, the optimization unit 703 is specifically configured to: if it is determined that the reason causing the exception of the first KQI includes: weak coverage exists, perform radio frequency RF optimization on a base station of weak coverage; if it is determined that the reason causing the exception of the first KQI includes: pilot pollution exists, perform radio frequency RF optimization on a base station of pilot pollution; if it is determined that the reason causing the exception of the first KQI includes: interference exists, perform radio frequency RF optimization on a base station that is interfered with; if it is determined that the reason causing the exception of the first KQI includes: the bandwidth resource is not greater than the threshold E, perform capacity expansion processing on the bandwidth resource; if it is determined that the reason causing the exception of the first KQI includes: the CE resource is not greater than the threshold F, perform capacity expansion processing on the CE resource; if it is determined that the reason causing the exception of the first KQI includes: the quantity of handovers between base stations is greater than the threshold G, perform parameter checking to determine a parameter that is set inappropriately; and if it is determined that the reason causing the exception of the first KQI includes: the CQI quality is not greater than the threshold H, perform parameter checking to determine a parameter that is set inappropriately.

Further, the problem demarcation apparatus may determine only the network location of the exception of the first KQI, or determine only the reason of the exception of the first KQI, and cannot perform optimization. The problem demarcation apparatus may send determined information to a server, so that the server performs optimization processing or other processing according to the information. In this case, the problem demarcation apparatus may send the determined reason of the exception of the first KQI or the network location of the exception of the first KQI to the server. In this case, as shown in FIG. 9, the problem demarcation apparatus further includes:
a first sending unit 704, configured to: when the network location includes the wireless side or the core network side, send the determined reason causing the exception of the first KQI in the network location to the server.

Further, as shown in FIG. 9, the problem demarcation apparatus further includes:
a second sending unit 705, configured to: when the network location includes the terminal side or the SP side, send the network location of the exception of the first KQI to the server.

According to the problem demarcation apparatus provided in this embodiment of the present invention, a first KQI is acquired, and a network location of an exception of the first KQI is determined according to a demarcation indicator of the first KQI. In this way, the network location of the exception of the first KQI may be determined by using the demarcation indicator of the KQI, which helps in resolving the exception of the first KQI, so that a network location of an exception is determined rapidly by using a KQI parameter of a user service, and an operator quickly resolves the network exception. Further, after the network location of the exception of the first KQI is determined, a reason causing the exception of the first KQI in the network location is determined according to a locating indicator, and network optimization is performed according to the reason, thereby further improving efficiency of resolving a network problem.

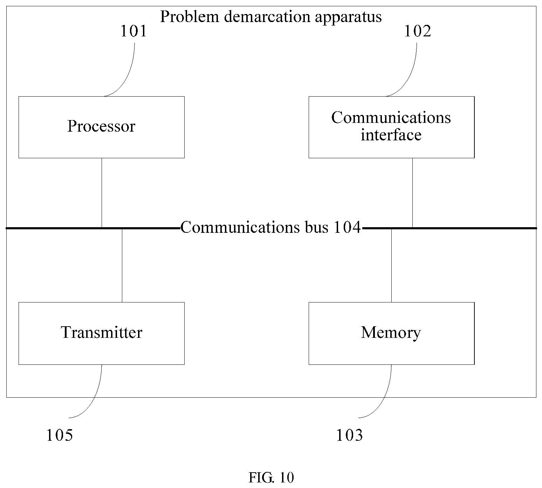

As shown in FIG. 10, FIG. 10 is a schematic structural diagram of a problem demarcation apparatus according to the present invention. Referring to FIG. 10, the problem demarcation apparatus includes: a processor (processor) 101, a communications interface (Communications Interface) 102, a memory (memory) 103, a communications bus 104, and a transmitter 105, where the processor 101, the communications interface 102, the transmitter 105, and the memory 103 communicate with each other by using the communications bus 104.

The processor 101 may be a central processing unit CPU, or an application specific integrated circuit ASIC (Application Specific Integrated Circuit), or one or more integrated circuits configured to implement this embodiment of the present invention.

The memory 103 is configured to store program code, where the program code includes a computer operation instruction. The memory 103 may include a high speed RAM memory, or may further include a non-volatile memory (non-volatile memory), for example, at least one magnetic disk memory. The processor 101 is configured to invoke the program code in the memory 103. Specifically:

The communications interface 102 is configured to acquire a first key quality indicator KQI.

The first KQI refers to one of one or more abnormal KQIs among KQIs.

Specifically, the communications interface 102 is specifically configured to: when a user processes a service, acquire KQIs of the service, and therefore, determine an abnormal KQI from the acquired KQI, and further determine the first KQI from one or more abnormal KQIs.

It should be noted that, a method for determining, by the communications interface 102, the first KQI from one or more abnormal KQIs may be: randomly selecting one from the one or more abnormal KQIs; or may be: sequencing KQIs based on priorities according to the service, so as to select, from the one or more abnormal KQIs, a KQI having a highest priority as the first KQI.

Further, after acquiring KQIs of a user service, the communications interface 102 may determine a filter condition according to the user service, and determine one or more abnormal KQIs, so as to determine the first KQI.

It should be noted that, filter conditions corresponding to different user services may be preset. For different user services, the preset filter conditions are different.

The processor 101 is configured to determine a network location of an exception of the first KQI according to a demarcation indicator of the first KQI acquired by the communications interface 102.

The network location includes a wireless side, a core network side, a terminal side, and a serving SP side. The demarcation indicator is an indicator used to determine a network location causing a KQI exception.

It should be noted that, the demarcation indicator of the first KQI is preset by the problem demarcation apparatus.

Specifically, the processor 101 is specifically configured to: if a quantity of zero windows of a terminal in the demarcation indicator is greater than 0, determine that the network location of the exception of the first KQI is the terminal side; or
if a receive window of a terminal in the demarcation indicator is less than the threshold H, determine that the network location of the exception of the first KQI is the terminal side; or
if a first latency of Transmission Control Protocol TCP connection establishment in the demarcation indicator is greater than a threshold I, determine that the network location of the exception of the first KQI is the core network side, where
the first latency refers to a latency from a time a request end sends a synchronize sequence number SYN message to a time the request end receives a synchronize sequence number acknowledgement SYN ACK message in a TCP connection establishment process; or
if a second latency of TCP connection establishment in the demarcation indicator is greater than a threshold J, determine that the network location of the exception of the first KQI is the wireless side, where
the second latency refers to a latency from a time a receive end sends a SYN ACK message to a time the receive end receives an acknowledgement ACK message in a TCP connection establishment process; or
if a request response latency in the demarcation indicator is greater than a threshold K, determine that the network location of the exception of the first KQI is the core network side; or
if an average latency of a downlink round-trip time RTT in the demarcation indicator is greater than a threshold L, determine that the network location of the exception of the first KQI is the wireless side; or
if a downlink packet loss rate in the demarcation indicator is greater than a threshold M, determine that the network location of the exception of the first KQI is the wireless side; or
if an uplink packet loss rate in the demarcation indicator is greater than a threshold N, determine that the network location of the exception of the first KQI is the core network side; or
if a failure reason code in the demarcation indicator is a code starting with 4, determine that the network location of the exception of the first KQI is the terminal side; or
if a failure reason code in the demarcation indicator is a code starting with 5, determine that the network location of the exception of the first KQI is the serving SP side.

Further, the processor 101 is further configured to: in a case in which the network location includes the wireless side or the core network side, acquire a locating indicator of the first KQI.

The locating indicator is used to determine a reason causing a KQI exception.

In this case, the processor 101 is further configured to determine, according to the acquired locating indicator, a reason causing the exception of the first KQI in the network location.

Further, the locating indicator includes at least one of a measurement report MR and a call history record CHR.

The processor 101 is specifically configured to: in a case in which the locating indicator includes the MR, determine, according to the MR, the reason causing the exception of the first KQI in the network location.

Specifically, the processor 101 is specifically configured to acquire a user identifier of the MR, an MR time, a user identifier corresponding to the first KQI, a start time of the first KQI, and an end time of the first KQI; if the user identifier of the MR is the same as the user identifier corresponding to the first KQI, and the sum of the MR time and a first time is greater than the start time of the first KQI and is less than the end time of the first KQI, associate the parameter of the MR with the first KQI; and determine, according to the parameter of the MR associated with the first KQI, the reason causing the exception of the first KQI in the network location.

The MR time refers to a time of receiving the MR, that is, duration from a time of starting to receive the MR to a time of stopping receiving the MR. The start time of the first KQI refers to a start time of a first KQI service. The end time of the first KQI refers to an end time of the first KQI service.

Exemplarily, during network surfing on a mobile phone, if the first KQI is a network surfing KQI, the start time of the first KQI refers to a time of initiating a network service, and the end time of the first KQI refers to a time when webpage display is completed.

Further, the user identifier may be an IMSI (nternational Mobile Subscriber Identification Number, International Mobile Subscriber Identity), or may be another identifier that can uniquely identify a user, which is not limited in the present invention.

Further, the first time is a period of acquiring an MR periodically. Optionally, the first time may be 12 seconds. In this case, it indicates that the problem demarcation apparatus acquires one MR every 12 seconds.

It should be noted that associating the parameter of the MR with the first KQI may be writing the parameter of the MR into an indicator of the first KQI. Certainly, a manner of associating the parameter of the MR with the first KQI may also be another method, which is not limited in the present invention.

It should be noted that, the condition of associating the parameter of the MR with the first KQI may also be another condition, for example, replacing the foregoing IMSI with an IP address of the user. Certainly, another association condition may be possible, which is not limited in the present invention.

Further, the parameter of the MR includes at least one of the following: an adjacent received signal code power RSCP, and a serving RSCP, and/or a quantity of pilots, and/or a serving ratio Ec/Io of a received signal strength to an adjacent cell interference level.

The processor 101 is specifically configured to determine, according to the adjacent RSCP and the serving RSCP, whether weak coverage exists, and if weak coverage exists, determine that the reason causing the exception of the first KQI in the network location includes weak coverage; and/or determine, according to the adjacent RSCP, the serving RSCP, and the quantity of pilots, whether pilot pollution exists, and if pilot pollution exists, determine that the reason causing the exception of the first KQI in the network location includes pilot pollution; and/or determine, according to the adjacent RSCP, the serving RSCP, and the serving Ec/Io, whether interference exists, and if interference exists, determine that the reason causing the exception of the first KQI in the network location includes interference.

That is, the processor 101 is specifically configured to: after associating the parameters of the MR: the adjacent RSCP, and the serving RSCP, and/or the quantity of pilots, and/or the serving Ec/Io, with the first KQI, determine, according to the foregoing parameters, the reason causing the exception of the first KQI in the network location. The processor 101 may determine, according to whether the adjacent RSCP and the serving RSCP in the parameters of the MR that are associated with the first KQI are both less than a threshold A, whether weak coverage exists. If the adjacent RSCP and the serving RSCP are both less than the threshold A, the processor 101 determines that weak coverage exists, and determines that the weak coverage causes the exception of the first KQI in the network location. If weak coverage does not exist, the processor 101 may determine, according to whether a difference between the serving RSCP and the adjacent RSCP in the parameters of the MR that are associated with the first KQI is less than a threshold B, whether the quantity of pilots is not less than K, and whether the adjacent RSCP is not less than a difference between the serving RSCP and N, whether pilot pollution exists, where N is an integer not less than 0, and preferably, N is 5 DBm (decibel-millivolts); K is an integer less than 3, and preferably, K is 3. If the difference between the serving RSCP and the adjacent RSCP is less than the threshold B, the quantity of pilots is not less than K, and the adjacent RSCP is not less than the difference between the serving RSCP and N, the processor 101 determines that pilot pollution exists, and determines that the pilot pollution causes the exception of the first KQI in the network location. If pilot pollution does not exist, the processor 101 may determine, according to whether the adjacent RSCP and the serving RSCP in the parameters of the MR that are associated with the first KQI are not less than a threshold C and whether the serving Ec/Io is not greater than a threshold D, whether interference exists. If the adjacent RSCP and the serving RSCP are not less than the threshold C and the serving Ec/Io is not greater than the threshold D, the processor 101 determines that interference exists, and determines that the interference causes the exception of the first KQI in the network location.

It should be noted that, a sequence of determining, by the processor 101 according to the parameters of the MR that are associated with the first KQI, the reason causing the exception of the first KQI in the network location is not limited in this embodiment of the present invention. The problem demarcation apparatus may also first determine, according to the adjacent RSCP, the serving RSCP, and the quantity of pilots in the parameters of the MR that are associated with first KQI, whether pilot pollution exists, and in a case in which pilot pollution does not exist, determine, according to another parameter of the MR associated with the first KQI, the reason causing the exception of the first KQI in the network location. This example is only exemplary.

It should be noted that, the parameter of the MR associated with the first KQI may also be another parameter, for example, BLER; the processor 101 determines, according to another parameter, the reason causing the exception of the first KQI in the network location, which is not limited in the present invention.

It should be noted that, if the parameter of the MR includes multiple adjacent RSCPs, when the reason causing the exception of the first KQI in the network location is determined, whether all adjacent RSCPs satisfy the condition needs to be checked.

It should be noted that, the threshold A, the threshold B, the threshold C, and the threshold D are preset.

Further, the processor 101 is specifically configured to: in a case in which the locating indicator includes the CHR, determine, according to the CHR, the reason causing the exception of the first KQI in the network location.

Specifically, the processor 101 is specifically configured to: acquire a user identifier of the CHR, a start time of the CHR, an end time of the CHR, a user identifier corresponding to the first KQI, a start time of the first KQI, and an end time of the first KQI; if the user identifier of the HCR is the same as the user identifier corresponding to the first KQI, the start time of the CHR is less than the start time of the first KQI, and the end time of the CHR is greater than the end time of the first KQI, associate a parameter of the CHR with the first KQI; and determine, according to the parameter of the CHR associated with the first KQI, the reason causing the exception of the first KQI in the network location.

The start time of the CHR refers to a time of establishing an RRC (Radio Resource Control, radio resource control) link, that is, a time of starting to establish a radio link. The end time of the CHR refers to a time of releasing an RRC link, that is, a time of releasing a radio link.

It should be noted that associating the parameter of the CHR with the first KQI may be writing the parameter of the CHR into an indicator of the first KQI, as shown in FIG. 5. Certainly, a manner of associating the parameter of the CHR with the first KQI may also be another method, which is not limited in the present invention.

Further, the parameter of the CHR associated with the first KQI includes at least one of the following: a bandwidth resource, a CE resource, CQI quality, and a quantity of handovers between base stations.

The processor 101 is specifically configured to determine, according to the bandwidth resource, whether the bandwidth resource is not greater than a threshold E, and if the bandwidth resource is not greater than the threshold E, determine that the reason causing the exception of the first KQI in the network location includes bandwidth resource limitation; and/or determine, according to the CE resource, whether the CE resource is not greater than a threshold F, and if the CE resource is not greater than the threshold F, determine that the reason causing the exception of the first KQI in the network location includes CE resource limitation; and/or determine, according to the quantity of handovers between base stations, whether the quantity of handovers between base stations is greater than a threshold G, and if the quantity of handovers between base stations is greater than the threshold G, determine that the reason causing the exception of the first KQI in the network location includes frequent handovers between base stations; and/or determine, according to the CQI quality, whether the CQI quality is not greater than a threshold H, and if the CQI quality is not greater than the threshold H, determine that the reason causing the exception of the first KQI in the network location includes poor CQI quality.

That is, the processor 101 is specifically configured to: after associating the parameters of the CHR: the bandwidth resource, the CE resource, the CQI quality, and the quantity of handovers between base stations, with the first KQI, determine, according to the foregoing parameters, the reason causing the exception of the first KQI in the network location. The processor 101 may detect whether the bandwidth resource is not greater than the threshold E; and if it is detected that the bandwidth resource is not greater than the threshold E, determine that the bandwidth resource is limited, and may determine that the reason causing the exception of the first KQI in the network location is bandwidth resource limitation. If it is detected that the bandwidth resource is greater than the threshold E, the processor 101 may detect whether the CE resource is not greater than the threshold F; and if the CE resource is not greater than the threshold F, determine that the CE resource is limited, and may determine that the reason causing the exception of the first KQI in the network location is CE resource limitation. If the CE resource is not greater than the threshold F, the processor 101 may detect whether the quantity of handovers between base stations is greater than the threshold G; and if the quantity of handovers between base stations is greater than the threshold G, determine that handovers between base stations are excessively frequent, and may determine that the reason causing the exception of the first KQI in the network location is that the quantity of handovers between base stations is greater than the threshold G. If the quantity of handovers between base stations is not greater than the threshold G, the processor 101 may detect whether the CQI quality is not greater than the threshold H; and if the CQI quality is not greater than the threshold H, determine that the CQI quality is poor, and may determine that the reason causing the exception of the first KQI is poor CQI quality.

It should be noted that, a sequence of determining, by the processor 101 according to the parameters of the CHR that are associated with the first KQI, the reason causing the exception of the first KQI in the network location is not limited in this embodiment of the present invention. The problem demarcation apparatus may also first detect whether the CE resource is not greater than the threshold F, and when the CE resource is greater than the threshold F, the problem demarcation apparatus detects another parameter of the CHR, and determines the reason causing the exception of the first KQI in the network location. This example is only exemplary.

It should be noted that, the parameter of the CHR associated with the first KQI may also be another parameter, for example, a packet loss rate or a frame error rate. In this case, the problem demarcation apparatus determines, according to another parameter of the CHR, such as the packet loss rate or the frame error rate, the reason causing the exception of the first KQI in the network location, which is not limited in the present invention.

It should be noted that, the threshold E, the threshold F, and the threshold G are preset.

The processor 101 is further configured to perform network optimization according to the determined reason causing the exception of the first KQI.

Specifically, the processor 101 is specifically configured to: if it is determined that the reason causing the exception of the first KQI includes: weak coverage exists, perform radio frequency RF optimization on a base station of weak coverage; if it is determined that the reason causing the exception of the first KQI includes: pilot pollution exists, perform radio frequency RF optimization on a base station of pilot pollution; if it is determined that the reason causing the exception of the first KQI includes: interference exists, perform radio frequency RF optimization on a base station that is interfered with; if it is determined that the reason causing the exception of the first KQI includes: the bandwidth resource is not greater than the threshold E, perform capacity expansion processing on the bandwidth resource; if it is determined that the reason causing the exception of the first KQI includes: the CE resource is not greater than the threshold F, perform capacity expansion processing on the CE resource; if it is determined that the reason causing the exception of the first KQI includes: the quantity of handovers between base stations is greater than the threshold G, perform parameter checking to determine a parameter that is set inappropriately; and if it is determined that the reason causing the exception of the first KQI includes: the CQI quality is not greater than the threshold H, perform parameter checking to determine a parameter that is set inappropriately.

The transmitter 105 is configured to: when the network location includes the wireless side or the core network side, send the determined reason causing the exception of the first KQI in the network location to a server.

Alternatively, the transmitter 105 is configured to: when the network location includes the terminal side or the SP side, send the network location of the exception of the first KQI to the server.

According to the problem demarcation apparatus provided in this embodiment of the present invention, a first KQI is acquired, and a network location of an exception of the first KQI is determined according to a demarcation indicator of the first KQI. In this way, the network location of the exception of the first KQI may be determined by using the demarcation indicator of the KQI, which helps in resolving the exception of the first KQI, so that a network location of an exception is determined rapidly by using a KQI parameter of a user service, and an operator quickly resolves the network exception. Further, after the network location of the exception of the first KQI is determined, a reason causing the exception of the first KQI in the network location is determined according to a locating indicator, and network optimization is performed according to the reason, thereby further improving efficiency of resolving a network problem.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A problem demarcation method, comprising:
acquiring (101) a first key quality indicator, KQI, wherein the first KQI refers to one of one or more abnormal KQIs among KQIs; and
determining (102) a network location of the first KQI according to a demarcation indicator of the first KQI, wherein the network location comprises: a wireless side, a core network side, a terminal side, and a serving SP side, and the demarcation indicator is an indicator used to determine a network location causing a KQI exception;
wherein
if the network location comprises the wireless side or the core network side, after the determining a network location of the first KQI according to a demarcation indicator of the first KQI, the method further comprises:
acquiring (103) a locating indicator corresponding to the first KQI, wherein the locating indicator is used to determine a reason causing a KQI exception; and
determining (104), according to the locating indicator, a reason causing the first KQI in the network location;
wherein
the locating indicator comprises at least one of a measurement report, MR, and a call history record, CHR; wherein
in a case in which the locating indicator comprises the MR, the determining, according to the locating indicator, a reason causing the first KQI in the network location comprises:
acquiring a user identifier of the MR, an MR time, a user identifier corresponding to the first KQI, a start time of the first KQI, and an end time of the first KQI, wherein the MR time refers to a time of receiving the MR;
if the user identifier of the MR is the same as the user identifier corresponding to the first KQI, and the sum of the MR time and a first time is greater than the start time of the first KQI and is less than the end time of the first KQI, associating a parameter of the MR with the first KQI, wherein the first time is a preset acquisition period of the MR; and
determining, according to the parameter of the MR associated with the first KQI, the reason causing the first KQI in the network location.

2. The method according to claim 1, wherein the parameter of the MR comprises at least one of the following: an adjacent received signal code power, RSCP, and a serving RSCP, and/or a quantity of pilots, and/or a serving ratio Ec/Io of a received signal strength to an adjacent cell interference level.

3. The method according to claim 1 or 2, wherein the determining, according to the parameter of the MR associated with the first KQI, the reason causing the first KQI in the network location comprises at least one of the following:
determining, according to the adjacent RSCP and the serving RSCP, whether weak coverage exists, and if weak coverage exists, determining that the reason causing the first KQI in the network location comprises weak coverage;
determining, according to the adjacent RSCP, the serving RSCP, and the quantity of pilots, whether pilot pollution exists, and if pilot pollution exists, determining that the reason causing the first KQI in the network location comprises pilot pollution; and
determining, according to the adjacent RSCP, the serving RSCP, and the serving Ec/Io, whether interference exists, and if interference exists, determining that the reason causing the first KQI in the network location comprises interference.

4. The method according to any one of claims 1 to 3, wherein
in a case in which the locating indicator comprises the CHR, the determining, according to the locating indicator, a reason causing the first KQI in the network location comprises:
acquiring a user identifier of the CHR, a start time of the CHR, an end time of the CHR, a user identifier corresponding to the first KQI, a start time of the first KQI, and an end time of the first KQI;
if the user identifier of the CHR is the same as the user identifier corresponding to the first KQI, the start time of the CHR is earlier than the start time of the first KQI, and the end time of the CHR is later than the end time of the first KQI, associating a parameter of the CHR with the first KQI; and
determining, according to the parameter of the CHR associated with the first KQI, the reason causing the first KQI in the network location.

5. The method according to claim 4, wherein the parameter of the CHR associated with the first KQI comprises at least one of the following: a bandwidth resource, a CE resource, CQI quality, and a quantity of handovers between base stations.

6. The method according to claim 4 or 5, wherein the determining, according to the parameter of the CHR associated with the first KQI, the reason causing the first KQI in the network location comprises at least one of the following:
determining, according to the bandwidth resource, whether the bandwidth resource is not greater than a threshold E, and if the bandwidth resource is not greater than the threshold E, determining that the reason causing the first KQI in the network location comprises bandwidth resource limitation;
determining, according to the CE resource, whether the CE resource is not greater than a threshold F, and if the CE resource is not greater than the threshold F, determining that the reason causing the first KQI in the network location comprises CE resource limitation;
determining, according to the quantity of handovers between base stations, whether the quantity of handovers between base stations is greater than a threshold G, and if the quantity of handovers between base stations is greater than the threshold G, determining that the reason causing the first KQI in the network location comprises frequent handovers between base stations; and
determining, according to the CQI quality, whether the CQI quality is not greater than a threshold H, and if the CQI quality is not greater than the threshold H, determining that the reason causing the first KQI in the network location comprises poor CQI quality.

7. The method according to any one of claims 1 to 6, wherein the determining a network location of the first KQI according to a demarcation indicator of the first KQI comprises:
if a quantity of zero windows of a terminal in the demarcation indicator is greater than 0, determining that the network location of the first KQI is the terminal side; or
if a receive window of a terminal in the demarcation indicator is less than the threshold H, determining that the network location of the first KQI is the terminal side; or
if a first latency of Transmission Control Protocol TCP connection establishment in the demarcation indicator is greater than a threshold I, determining that the network location of the first KQI is the core network side, wherein the first latency refers to a latency from a time a request end sends a synchronize sequence number SYN message to a time the request end receives a synchronize sequence number acknowledgement SYN ACK message in a TCP connection establishment process; or
if a second latency of TCP connection establishment in the demarcation indicator is greater than a threshold J, determining that the network location of the first KQI is the wireless side, wherein the second latency refers to a latency from a time a receive end sends a SYN ACK message to a time the receive end receives an acknowledgement ACK message in a TCP connection establishment process; or
if a request response latency in the demarcation indicator is greater than a threshold K, determining that the network location of the first KQI is the core network side; or
if an average latency of a downlink round-trip time RTT in the demarcation indicator is greater than a threshold L, determining that the network location of the first KQI is the wireless side; or
if a downlink packet loss rate in the demarcation indicator is greater than a threshold M, determining that the network location of the first KQI is the wireless side; or
if an uplink packet loss rate in the demarcation indicator is greater than a threshold N, determining that the network location of the first KQI is the core network side; or
if a failure reason code in the demarcation indicator is a code starting with 4, determining that the network location of the first KQI is the terminal side; or
if a failure reason code in the demarcation indicator is a code starting with 5, determining that the network location of the first KQI is the serving SP side.

8. A problem demarcation apparatus, comprising:
an acquiring unit (701), configured to acquire a first key quality indicator KQI, wherein the first KQI refers to one of one or more abnormal KQIs among KQIs; and
a determining unit (702), configured to determine a network location of the first KQI according to a demarcation indicator of the first KQI acquired by the acquiring unit, wherein the network location comprises: a wireless side, a core network side, a terminal side, and a serving SP side, and the demarcation indicator is an indicator used to determine a network location causing a KQI exception;
wherein
the acquiring unit (701) is further configured to: in a case in which the network location comprises the wireless side or the core network side, acquire a locating indicator corresponding to the first KQI, wherein the locating indicator is used to determine a reason causing a KQI exception; and
the determining unit (702) is further configured to determine, according to the locating indicator acquired by the acquiring unit, a reason causing the first KQI in the network location;
wherein the locating indicator comprises at least one of a measurement report MR and a call history record CHR;
wherein
the determining unit (702) is specifically configured to: in a case in which the locating indicator comprises the MR, acquire a user identifier of the MR, an MR time, a user identifier corresponding to the first KQI, a start time of the first KQI, and an end time of the first KQI, wherein the MR time refers to a time of receiving the MR;
if the user identifier of the MR is the same as the user identifier corresponding to the first KQI, and the sum of the MR time and a first time is greater than the start time of the first KQI and is less than the end time of the first KQI, associate a parameter of the MR with the first KQI, wherein the first time is a preset acquisition period of the MR; and
determine, according to the parameter of the MR associated with the first KQI, the reason causing the first KQI in the network location.

9. The apparatus according to claim 8, wherein the parameter of the MR comprises at least one of the following: an adjacent received signal code power RSCP, and a serving RSCP, and/or a quantity of pilots, and/or a serving ratio Ec/Io of a received signal strength to an adjacent cell interference level.

## Patentansprüche

1. Problemabgrenzungsverfahren, umfassend:
Erfassen (101) eines ersten Schlüsselgüteanzeigers, KQI (Key Quality Indicator), wobei sich der erste KQI auf einen von einem oder mehreren ungewöhnlichen KQI unter KQI bezieht; und
Bestimmen (102) einer Netzwerkstelle des ersten KQI gemäß einem Abgrenzungsanzeiger des ersten KQI, wobei die Netzwerkstelle umfasst: eine drahtlose Seite, eine Kernnetzseite, eine Endgeräteseite und eine versorgende SP-Seite, und der Abgrenzungsanzeiger ein zum Bestimmen einer eine KQI-Ausnahme verursachenden Netzwerkstelle benutzter Anzeiger ist;
wobei
wenn die Netzwerkstelle die drahtlose Seite oder die Kernnetzseite umfasst, nach dem Bestimmen einer Netzwerkstelle des ersten KQI gemäß einem Abgrenzungsanzeiger des ersten KQI, das Verfahren Folgendes umfasst:
Erfassen (103) eines Ortungsanzeigers entsprechend dem ersten KQI, wobei der Ortungsanzeiger zum Bestimmen eines eine KQI-Ausnahme verursachenden Grundes benutzt wird; und
Bestimmen (104) gemäß dem Ortungsanzeiger eines den ersten KQI an der Vetzwerkstelle verursachenden Grundes; wobei
der Ortungsanzeiger wenigstens eines eines Messberichts, MR (Measurement Report), und einer Rufgeschichtenaufzeichnung, CHR (Call History Record), umfasst; wobei
in einem Fall, in dem der Ortungsanzeiger den MR umfasst, das Bestimmen gemäß dem Ortungsanzeiger eines den ersten KQI an der Netzwerkstelle verursachenden Grundes umfasst:
Erfassen einer Benutzerkennung des MR, einer MR-Zeit, einer Benutzerkennung entsprechend dem ersten KQI, einer Startzeit des ersten KQI und einer Endzeit des ersten KQI wobei sich die MR-Zeit auf eine Zeit des Empfangens des MR wenn die Benutzerkennung des MR die gleiche wie die Benutzerkennung entsprechend dem ersten KQI ist und die Summe der MR-Zeit und einer ersten Zeit größer als die Startzeit des ersten KQI und geringer als die Endzeit des ersten KQI ist, Zuordnen eines Parameters des MR zu dem ersten KQI, wobei die erste Zeit eine voreingestellte Erfassungsperiode des MR ist; und
Bestimmen gemäß dem Parameter des mit dem ersten KQI verbundenen MR des den ersten KQI an der Netzwerkstelle verursachenden Grundes.

2. Verfahren nach Anspruch 1, wobei der Parameter des MR wenigstens eines der Folgenden umfasst: eine benachbarte empfangene Signalcodeleistung, RSCP (Received Signal Code Power), und eine versorgende RSCP, und/oder eine Menge von Piloten und/oder ein versorgendes Verhältnis Ec/Io einer Empfangssignalstärke zu einem Nachbarzellenstörungspegel.

3. Verfahren nach Anspruch 1 oder 2, wobei das Bestimmen gemäß dem Parameter des mit dem ersten KQI verbundenen MR des den ersten KQI an der Netzwerkstelle verursachenden Grundes wenigstens eines der Folgenden umfasst:
Bestimmen gemäß der benachbarten RSCP und der versorgenden RSCP, ob schwache Versorgung besteht, und wenn schwache Versorgung besteht, Bestimmen, dass der den ersten KQI an der Netzwerkstelle verursachende Grund schwache Versorgung umfasst:
Bestimmen gemäß der benachbarten RSCP, der versorgenden RSCP und der Menge von Piloten, ob Pilotenverseuchung besteht, und wenn Pilotenverseuchung besteht, Bestimmen, dass der den ersten KQI an der Netzwerkstelle verursachende Grund Pilotenverseuchung umfasst; und
Bestimmen gemäß der benachbarten RSCP, der versorgenden RSCP und dem versorgenden Ec/Io, ob Störung besteht, und wenn Störung besteht, Bestimmen, dass der den ersten KQI an der Netzwerkstelle verursachende Grund Störung umfasst.

4. Verfahren nach einem beliebigen der Ansprüche 1 bis 3, wobei in einem Fall, in dem der Ortungsanzeiger die CHR umfasst, das Bestimmen gemäß dem Ortungsanzeiger eines den ersten KQI an der Netzwerkstelle verursachenden Grundes umfasst:
Erfassen einer Benutzerkennung der CHR, einer Startzeit der CHR, einer Endzeit der CHR, einer Benutzerkennung entsprechend dem ersten KQI, einer Startzeit des ersten KQI und einer Endzeit des ersten KQI;
wenn die Benutzerkennung der CHR die gleiche wie die Benutzerkennung entsprechend dem ersten KQI ist, die Startzeit der CHR früher als die Startzeit des ersten KQI ist und die Endzeit der CHR später als die Endzeit des ersten KQI ist, Zuordnen eines Parameters der CHR zu dem ersten KQI; und
Bestimmen gemäß dem mit dem ersten KQI verbundenen Parameter der CHR des den ersten KQI an der Netzwerkstelle verursachanden Grundes.

5. Verfahren nach Anspruch 4, wobei der Parameter der mit dem ersten KQI verbundenen CHR wenigstens eines der Folgenden umfasst: eine Bandbreitenressource, eine CE-Ressource, CQI-Güte und eine Menge von Weiterschaltungen zwischen Basisstationen.

6. Verfahren nach Anspruch 4 oder 5, wobei das Bestimmen gemäß dem Parameter der mit dem ersten KQI verbundenen CHR des den ersten KQI an der Netzwerkstelle verursachenden Grundes wenigstens eines der Folgenden umfasst:
Bestimmen gemäß der Bandbreitenressource, ob die Bandbreitenressource nicht größer als ein Schwellwert E ist, und wenn die Bandbreitenressource nicht größer als der Schwellwert E ist, Bestimmen, dass der den ersten KQI an der Netzwerkstelle verursachende Grund Bandbreitenressourcenbegrenzung umfasst;
Bestimmen gemäß der CE-Ressource, ob die CE-Ressource nicht größer als ein Schwellwert F ist, und wenn die CE-Ressource nicht größer als der Schwellwert F ist, Bestimmen, dass der den ersten KQI an der Netzwerkstelle verursachende Grund CE-Ressourcenbegrenzung umfasst;
Bestimmen gemäß der Menge von Weiterschaltungen zwischen Basisstationen, ob die Menge von Weiterschaltungen zwischen Basisstationen größer als ein Schwellwert G ist, und wenn die Menge von Weiterschaltungen zwischen Basisstationen größer als der Schwellwert G ist, Bestimmen, dass der den KQI an der Netzwerkstelle verursachende Grund häufige Weiterschaltungen zwischen Basisstationen umfasst; und
Bestimmen gemäß der CQI-Güte, ob die CQI-Güte nicht größer als ein Schwellwert H ist, und wenn die CQI-Güte nicht größer als der Schwellwert H ist, Bestimmen, dass der den ersten KQI an der Netzwerkstelle verursachende Grund schlechte CQI-Güte umfasst.

7. Verfahren nach einem beliebigen der Ansprüche 1 bis 6, wobei das Bestimmen einer Netzwerkstelle des ersten KQI gemäß einem Abgrenzungsanzeiger des ersten KQI umfasst:
wenn eine Menge von null Fenstern eines Endgeräts in dem Abgrenzungsanzeiger größer als 0 ist, Bestimmen, dass die Netzwerkstelle des ersten KQI die Endgeräteseite ist; oder
wenn ein Empfangsfenster eines Endgeräts in dem Abgrenzungsanzeiger geringer als der Schwellwert H ist, Bestimmen, dass die Netzwerkstelle des ersten KQI die Endgeräteseite ist; oder
wenn eine erste Latenzzeit von TCP-Verbindungsherstellung (TCP = Transmission Control Protocol) in dem Abgrenzungsanzeiger größer als ein Schwellwert I ist, Bestimmen, dass die Netzwerkstelle des ersten KQI die Kernnetzseite ist, wobei sich die erste Latenzzeit auf eine Latenzzeit von einer Zeit bezieht, zu der ein Anfrageende eine Synchronisierfolgenummer (SYN)-Nachricht zu einer Zeit sendet, zu der das Anfrageende eine Synchronisierfolgenummerbestätigung (SYN ACK)-Nachricht in einem TCP-Verbindungsherstellungsvorgang empfängt; oder
wenn eine zweite Latenzzeit von TCP-Verbindungsherstellung in dem Abgrenzungsanzeiger größer als ein Schwellwert J ist, Bestimmen, dass die Netzwerkstelle des ersten KQI die drahtlose Seite ist, wobei sich die zweite Latenzzeit auf eine Latenzzeit von einer Zeit bezieht, zu der ein Empfangsende eine SYN ACK-Nachricht zu einer Zeit sendet, zu der das Empfangsende eine Bestätigungs(ACK)-Nachricht in einem TCP-Verbindungsherstellungsvorgang empfängt; oder
wenn eine Anfrageantwortlatenzzeit in dem Abgrenzungsanzeiger größer als ein Schwellwert K ist, Bestimmen, dass die Netzwerkstelle des ersten KQI die Kernnetzseite ist; oder
wenn eine durchschnittliche Latenzzeit einer Umlaufzeit (RTT = Round-Trip Time) auf der Abwärtsstrecke in dem Abgrenzungsanzeiger größer als ein Schwellwert L ist, Bestimmen, dass die Netzwerkstelle des ersten KQI die drahtlose Seite ist; oder
wenn eine Paketverlustrate auf der Abwärtsstrecke in dem Abgrenzungsanzeiger größer als ein Schwellwert M ist, Bestimmen, dass die Netzwerkstelle des ersten KQI die drahtlose Seite ist; oder
wenn eine Paketverlustrate auf der Aufwärtsstrecke in dem Abgrenzungsanzeiger größer als ein Schwellwert N ist, Bestimmen, dass die Netzwerkstelle des ersten KQI die Kernnetzseite ist; oder
wenn ein Ausfallursachencode in dem Abgrenzungsanzeiger ein mit 4 beginnender Code ist, Bestimmen, dass die Netzwerkstelle des ersten KQI die Endgeräteseite ist; oder
wenn ein Ausfallursachencode in dem Abgrenzungsanzeiger ein mit 5 beginnender Code ist, Bestimmen, dass die Netzwerkstelle des ersten KQI die versorgende SP-Seite ist.

8. Problemabgrenzungsvorrichtung, umfassend:
eine Erfassungseinheit (701) eingerichtet zum Erfassen eines ersten Schlüsselgüteanzeigers (KQI), wobei sich der erste KQI auf einen von einem oder mehreren ungewöhnlichen KQI unter KQI bezieht; und
eine Bestimmungseinheit (702) eingerichtet zum Bestimmen einer Netzwerkstelle des ersten KQI gemäß einem Abgrenzungsanzeiger des ersten durch die Erfassungseinheit erfassten KQI, wobei die Netzwerkstelle umfasst: eine drahtlose Seite, eine Kernnetzseite, eine Endgeräteseite und eine versorgende SP-Seite, und der Abgrenzungsanzeiger ein zum Bestimmen einer eine KQI-Ausnahme verursachenden Netzwerkstelle benutzter Anzeiger ist;
wobei
die Erfassungseinheit (701) weiterhin eingerichtet ist zum: in einem Fall, in dem die Netzwerkstelle die drahtlose Seite oder die Kernnetzseite umfasst, Erfassen eines Ortungsanzeigers entsprechend dem ersten KQI, wobei der Ortungsanzeiger Bestimmen eines eine KQI-Ausnahme verursachenden Grundes benutzt wird; und
die Bestimmungseinheit (702) weiterhin eingerichtet ist zum Bestimmen gemäß dem durch die Erfassungseinheit erfassten Ortungsanzeiger eines den ersten KQI an der Netzwerkstelle verursachenden Grundes;
wobei der Ortungsanzeiger wenigstens, eines eines Messberichts, MR (Measurement Report), und einer Rufgeschichtenaufzeichnung, CHR (Call History Record), umfasst; wobei
die Bestimmungseinheit (702) besonders eingerichtet ist zum: in einem Fall, in dem der Ortungsanzeiger den MR umfasst, Erfassen einer Benutzerkennung des MR, einer MR-Zeit, einer Benutzerkennung entsprechend dem ersten KQI, einer Startzeit des ersten KQI und einer Endzeit des ersten KQI, wobei sich die MR-Zeit auf eine Zeit des Empfangens des MR bezieht; wenn die Benutzerkennung des MR die gleiche wie die Benutzerkennung entsprechend dem ersten KQI ist, und die Summe der MR-Zeit und einer ersten Zeit größer als die Startzeit des ersten KQI ist und geringer als die Endzeit des ersten KQI ist, Zuordnen eines Parameters des MR zu dem ersten KQI, wobei die erste Zeit eine voreingestellte Erfassungsperiode des MR ist; und
Bestimmen gemäß dem Parameter des mit dem ersten KQI verbundenen MR des den ersten KQI an der Netzwerkstelle verursachenden Grundes.

9. Vorrichtung nach Anspruch 8, wobei der Parameter des MR wenigstens eines der Folgenden umfasst: eine benachbarte empfangene Signalcodeleistung, RSCP (Received Signal Code Power), und eine versorgende RSCP, und/oder eine Menge von Piloten und/oder ein versorgendes Verhältnis Ec/Io einer Empfangssignalstärke zu einem Nachbarzellenstörungspegel.

## Revendications

1. Procédé de délimitation de problème, comprenant les étapes consistant à :
acquérir (101) un premier indicateur de qualité clé, KQI, le premier KQI désignant un ou plusieurs KQI anormaux parmi des KQI ; et
déterminer (102) un emplacement de réseau du premier KQI d'après un indicateur de délimitation du premier KQI, l'emplacement de réseau comprenant : un côté sans fil, un côté réseau central, un côté terminal et un côté SP de desserte, et l'indicateur de délimitation étant un indicateur servant à déterminer un emplacement de réseau occasionnant une exception KQI ;
le procédé
si l'emplacement de réseau comprend le côté sans fil ou le côté réseau central, après la détermination d'un emplacement de réseau du premier KQI d'après un indicateur de délimitation du premier KQI, comprenant également les étapes consistant à :
acquérir (103) un indicateur d'emplacement correspondant au premier KQI, l'indicateur d'emplacement servant à déterminer la raison d'une exception KQI ; et
déterminer (104), d'après l'indicateur d'emplacement, une raison du premier KQI dans l'emplacement de réseau ;
l'indicateur d'emplacement comprenant au moins un rapport de mesure, MR, et un enregistrement d'historique des appels, CHR ;
dans le cas où l'indicateur d'emplacement contient le MR, la détermination, d'après l'indicateur d'emplacement, d'une raison du premier KQI dans l'emplacement de réseau comprenant les étapes consistant à :
acquérir un identificateur d'utilisateur du MR, une heure de MR, un identificateur d'utilisateur correspondant au premier KQI, une heure de début du premier KQI et une heure de fin du premier KQI, l'heure de MR désignant une heure de réception du MR;
si l'identificateur d'utilisateur du MR et l'identificateur d'utilisateur correspondant au premier KQI sont identiques, et que la somme de l'heure de MR et d'un premier temps est supérieure à l'heure de début du premier KQI et est inférieure à l'heure de fin du premier KQI, associer un paramètre du MR au premier KQI, le premier temps étant une période d'acquisition prédéfinie du MR ; et
déterminer, d'après le paramètre du MR associé au premier KQI, la raison du premier KQI dans l'emplacement de réseau.

2. Procédé selon la revendication 1, dans lequel le paramètre du MR comprend au moins un des éléments suivants : une puissance de code de signal reçu, RSCP, adjacente et une RSCP de desserte, et/ou une quantité de pilotes et/ou un rapport de desserte Ec/Io d'une intensité de signal reçu à un niveau d'interférence de cellule adjacente.

3. Procédé selon la revendication 1 ou 2, dans lequel la détermination, d'après le paramètre du MR associé au premier KQI, de la raison du premier KQI dans l'emplacement de réseau comprend au moins une des étapes consistant à :
déterminer, d'après la RSCP adjacente et la RSCP de desserte, s'il existe une couverture faible et, s'il existe une couverture faible, déterminer que la raison du premier KQI dans l'emplacement de réseau comprend la couverture faible ;
déterminer, d'après la RSCP adjacente, la RSCP de desserte et la quantité de pilotes, s'il existe une pollution de pilotes et, s'il existe une pollution de pilotes, déterminer que la raison du premier KQI dans l'emplacement de réseau comprend la pollution de pilotes ; et
déterminer, d'après la RSCP adjacente, la RSCP de desserte et le rapport de desserte Ec/Io, s'il existe de l'interférence et, s'il existe de l'interférence, déterminer que la raison du premier KQI dans l'emplacement de réseau comprend l'interférence.

4. Procédé selon l'une quelconque des revendications 1 à 3, dans lequel dans le cas où l'indicateur d'emplacement comprend le CHR, la détermination, d'après l'identificateur d'emplacement, d'une raison du premier KQI dans l'emplacement de réseau comprend les étapes consistant à :
acquérir un identificateur d'utilisateur du CHR, une heure de début CHR, une heure de fin du CHR, un identificateur d'utilisateur correspondant au premier KQI, une heure de début du premier KQI et une heure de fin du premier KQI ;
si l'identificateur d'utilisateur du CHR et l'identificateur d'utilisateur correspondant au premier KQI sont identiques, que l'heure de début du CHR est antérieure à l'heure de début du premier KQI et que l'heure de fin du CHR est postérieure à l'heure de fin du premier KQI, associer un paramètre du CHR au premier KQI ; et
déterminer, d'après le paramètre du CHR associé au premier KQI, la raison du premier KQI dans l'emplacement de réseau.

5. Procédé selon la revendication 4, dans lequel le paramètre du CHR associé au premier KQI comprend au moins l'un des éléments suivants : une ressource de largeur de bande, une ressource CE, la qualité CQI et une quantité de transferts entre stations de base.

6. Procédé selon la revendication 4 ou 5, dans lequel la détermination, d'après le paramètre du CHR associé au premier KQI, de la raison du premier KQI dans l'emplacement de réseau comprend au moins l'une des étapes consistant à :
déterminer, d'après la ressource de largeur de bande, si la ressource de largeur de bande n'est pas supérieure à un seuil E et, si la ressource de largeur de bande n'est pas supérieure au seuil E, déterminer que la raison du premier KQI dans l'emplacement de réseau comprend la limitation des ressources de largeur de bande ;
déterminer, d'après la ressource CE, si la ressource CE n'est pas supérieure à un seuil F et, si la ressource CE n'est pas supérieure au seuil F, déterminer que la raison du premier KQI dans l'emplacement de réseau comprend la limitation des ressources CE;
déterminer, d'après la quantité de transferts entre stations de base, si la quantité de transferts entre stations de base est supérieure à un seuil G et, si la quantité de transferts entre stations de base est supérieure au seuil G, déterminer que la raison du premier KQI dans l'emplacement de réseau comprend des transferts fréquents entre stations de base ; et
déterminer, d'après la qualité CQI, si la qualité CQI n'est pas supérieure à un seuil H et, si la qualité CQI n'est pas supérieure au seuil H, déterminer que la raison du premier KQI dans l'emplacement de réseau comprend une qualité CQI médiocre.

7. Procédé selon l'une quelconque des revendications 1 à 6, dans lequel la détermination d'un emplacement de réseau du premier KQI d'après un indicateur de délimitation du premier KQI comprend les étapes consistant à :
si une quantité de fenêtres zéro d'un terminal de l'indicateur de délimitation est supérieure à 0, déterminer que l'emplacement de réseau du premier KQI est le côté terminal ; ou
si une fenêtre de réception d'un terminal de l'indicateur de délimitation est inférieure au seuil H, déterminer que l'emplacement de réseau du premier KQI est le côté terminal ; ou
si une première latence de l'établissement de connexion de protocole de commande d'émission, TCP, de l'indicateur de délimitation est supérieure à un seuil I, déterminer que l'emplacement de réseau du premier KQI est le côté réseau central, la première latence désignant une latence entre un instant où une extrémité demandeuse envoie un message de synchronisation de numéro de séquence SYN et un instant où l'extrémité demandeuse reçoit un message d'accusé de réception de synchronisation de numéro de séquence SYN ACK dans un processus d'établissement de connexion TCP ; ou
si une deuxième latence de l'établissement de connexion TCP de l'indicateur de délimitation est supérieure à un seuil J, déterminer que l'emplacement de réseau du premier KQI est le côté sans fil, la deuxième latence désignant une latence entre un instant où une extrémité de réception envoie un message SYN ACK et un instant où l'extrémité de réception reçoit un message d'accusé de réception ACK dans un processus d'établissement de connexion TCP ; ou
si une latence de réponse de demande de l'indicateur de délimitation est supérieure à un seuil K, déterminer que l'emplacement de réseau du premier KQI est le côté réseau central ; ou
si une latence moyenne d'un temps d'aller-retour RTT de liaison descendante de l'indicateur de délimitation est supérieure à un seuil L, déterminer que l'emplacement de réseau du premier KQI est le côté sans fil ; ou
si un taux de perte de paquets de liaison descendante de l'indicateur de délimitation est supérieur à un seuil M, déterminer que l'emplacement de réseau du premier KQI est le côté sans fil ; ou
si un taux de perte de paquets de liaison montante de l'indicateur de délimitation est supérieur à un seuil N, déterminer que l'emplacement de réseau du premier KQI est le côté terminal ; ou
si un code de motif d'échec de l'indicateur de délimitation est un code commençant par 4, déterminer que l'emplacement de réseau du premier KQI est le côté terminal ; ou
si un code de motif d'échec de l'indicateur de délimitation est un code commençant par 5, déterminer que l'emplacement de réseau du premier KQI est le côté SP de desserte.

8. Appareil de délimitation de problème, comprenant :
une unité d'acquisition (701), conçue pour acquérir un premier indicateur de qualité clé, KQI, le premier KQI désignant un ou plusieurs KQI anormaux parmi des KQI ; et
une unité de détermination (702), conçue pour déterminer un emplacement de réseau du premier KQI d'après un indicateur de délimitation du premier KQI acquis par l'unité d'acquisition, l'emplacement de réseau comprenant : un côté sans fil, un côté réseau central, un côté terminal et un côté SP de desserte, et l'indicateur de délimitation étant un indicateur servant à déterminer un emplacement de réseau occasionnant une exception KQI ;
dans lequel
l'unité d'acquisition (701) est également conçue pour : dans le cas où l'emplacement de réseau comprend le côté sans fil ou le côté réseau central, acquérir un indicateur d'emplacement correspondant au premier KQI, l'indicateur d'emplacement servant à déterminer la raison d'une exception KQI ; et
l'unité de détermination (702) est également conçue pour : déterminer, d'après l'indicateur d'emplacement acquis par l'unité d'acquisition, une raison du premier KQI dans l'emplacement de réseau ;
l'indicateur d'emplacement comprenant au moins un rapport de mesure, MR, et un enregistrement d'historique des appels, CHR ;
dans lequel
l'unité de détermination (702) est spécifiquement conçue pour : dans le cas où l'indicateur d'emplacement contient le MR, acquérir un identificateur d'utilisateur du MR, une heure de MR, un identificateur d'utilisateur correspondant au premier KQI, une heure de début du premier KQI et une heure de fin du premier KQI, l'heure de MR désignant une heure de réception du MR ;
si l'identificateur d'utilisateur du MR et l'identificateur d'utilisateur correspondant au premier KQI sont identiques, et que la somme de l'heure de MR et d'un premier temps est supérieure à l'heure de début du premier KQI et est inférieure à l'heure de fin du premier KQI, associer un paramètre du MR au premier KQI, le premier temps étant une période d'acquisition prédéfinie du MR ; et
déterminer, d'après le paramètre du MR associé au premier KQI, la raison du premier KQI dans l'emplacement de réseau.

9. Appareil selon la revendication 8, dans lequel le paramètre du MR comprend au moins un des éléments suivants : une puissance de code de signal reçu, RSCP, adjacente et une RSCP de desserte, et/ou une quantité de pilotes et/ou un rapport de desserte Ec/Io d'une intensité de signal reçu à un niveau d'interférence de cellule adjacente.
